# EUROPÄISCHE PATENTSCHRIFT

(11) **EP 4 190 487 B1**
(45) Veröffentlichungstag und Bekanntmachung des Hinweises auf die Patenterteilung: **16.09.2026**
(21) Anmeldenummer: 22209331.2
(22) Anmeldetag: 24.11.2022
(51) Int. Cl.: B23Q 1/48, B23Q 3/157, B23Q 3/155

(54) **WERKZEUGWECHSELVORRICHTUNG, WERKZEUGMASCHINE UND VERFAHREN ZUM WECHSELN EINES WERKZEUGS**
TOOL CHANGING DEVICE, MACHINE TOOL, AND METHOD FOR CHANGING A TOOL
DISPOSITIF DE CHANGEMENT D'OUTIL, MACHINE-OUTIL ET PROCÉDÉ DE CHANGEMENT D'OUTIL

(30) Priorität: 02.12.2021 DE 102021131810
(43) Veröffentlichungstag der Anmeldung: 07.06.2023
(73) Patentinhaber: CHIRON Group SE, 78532 Tuttlingen (DE)
(72) Erfinder: Efinger, Matthias, 78554 Aixheim (DE); Huber, Sebastian, 78573 Wurmlingen (DE)
(74) Vertreter: Witte, Weller & Partner Patentanwälte mbB

(56) Entgegenhaltungen:
- EP-A1- 2 567 783
- EP-A1- 3 456 466
- US-A- 3 745 646

## Beschreibung

Die vorliegende Offenbarung betrifft eine Werkzeugwechselvorrichtung für eine Werkzeugmaschine. Ferner betrifft die vorliegende Offenbarung eine mit einer solchen Werkzeugwechselvorrichtung versehene Werkzeugmaschine sowie ein Verfahren zum Wechseln eines Werkzeugs.

Aus der US 3 745 646 A ist ein Werkzeugmagazin für eine Stanze bekannt, das eine Mehrzahl von übereinander angeordneten Scheiben aufweist, die auf einer Basis ruhen und um eine gemeinsame vertikale Achse rotierbar und entlang der vertikalen Achse translatorisch verfahrbar sind. Die Scheiben weisen jeweils Aufnahmeplätze zur Aufnahme von Werkzeugen in stehender (vertikaler) Orientierung auf. Die Längsachse der Werkzeuge ist parallel zur Längsachse des Werkzeugmagazins ausgerichtet.

Aus der EP 3 456 466 A1 ist eine Schleifmaschine mit zugehörigem Werkzeugmagazin zur Aufnahme von Schleifscheiben bekannt, wobei das Werkzeugmagazin horizontal orientiert ist und mehrere horizontal voneinander beabstandete Magazinräder aufweist, die gemeinsam translatorisch verfahrbar und um eine horizontale Magazinachse rotierbar sind. Die Längsachse der Werkzeuge ist parallel zur Längsachse des Werkzeugmagazins ausgerichtet.

Aus der EP 0 310 953 A1 ist ein Werkzeugspeicher für Werkzeugmaschinen bekannt, der an einer Säule gelagert, um die Säule rotierbar und entlang der Säule vertikal verfahrbar ist. Werkzeuge sind in radialer Orientierung lückenlos am Umfang des Werkzeugspeichers aufgenommen, so dass kein direkter Zugriff für einen Werkzeugwechsler möglich ist. Innerhalb des Werkzeugspeichers ist eine Verschiebeeinheit verbaut, die bedarfsweise Werkzeuge radial aus dem Werkzeugspeicher herausfährt, so dass eine Übergabe an einen separaten Werkzeugwechsler möglich ist. Damit muss also innerhalb des Werkzeugspeichers weitere Handhabungstechnik verbaut sein, um die Verschiebeeinheit zu realisieren.

Aus der EP 2 177 310 A2 ist ein Bearbeitungszentrum mit einem in dessen Arbeitsraum integrierten, säulenartig gestalteten Werkzeugmagazin bekannt, wobei das Werkzeugmagazin eine Mehrzahl von Aufnahmen für Werkzeuge aufweist, die orthogonal zur Längserstreckung der Säule und radial zu einer Mittenachse der Säule orientiert sind. Das Bearbeitungszentrum umfasst eine Werkzeugspindel, die zwischen einer im Wesentlichen vertikalen Orientierung und einer im Wesentlichen horizontalen Orientierung verschwenkbar ist, so dass die Werkzeugspindel Werkzeuge, die mit ihrer Bearbeitungsseite im Werkzeugmagazin angeordnet sind, an ihrer Schaftseite greifen und spannen kann. Das Werkzeugmagazin ist entlang einer linearen Achse in Richtung auf die Werkzeugspindel verfahrbar. Die Werkzeugspindel ist entlang einer linearen Achse verfahrbar, die sich parallel zur Mittenachse der Säule erstreckt.

Aus der DE 197 08 096 A1 ist ein Bearbeitungszentrum mit einer Werkzeugspindel und einem Drehtisch bekannt, wobei der Drehtisch einen oder mehrere Plätze zur Aufnahme von Werkstücken aufweist, und wobei der Drehtisch zumindest einem Platz für ein Scheibenmagazin mit übereinander angeordneten Scheiben aufweist. Die Scheiben bilden mehrere Ebenen des Scheibenmagazins. Auf den Ebenen des Scheibenmagazins sind Werkzeuge in liegender Orientierung angeordnet, wobei ein jeweiliger Werkzeugschaft radial nach außen orientiert ist. Die Werkzeugspindel kann in Richtung auf die Ebenen des Scheibenmagazins vertikal verfahren werden, wobei die Werkzeugspindel eine konzentrische Orientierung in Bezug auf einen Werkzeugschaft eines zu wechselnden Werkzeugs aufweist.

Aus der DE 10 2014 218 899 A1 ist ein auf einem Ständer angeordnetes Scheibenmagazin für Werkzeuge einer Werkzeugmaschine bekannt, wobei das Scheibenmagazin eine Mehrzahl von übereinander angeordneten Scheiben mit Aufnahmen für Werkzeuge in vertikaler Orientierung aufweist. Ferner ist zumindest ein parallel und im Wesentlichen radial zu einer Längsachse des Scheibenmagazins verfahrbarer Werkzeugwechsler mit Doppelgreifer vorgesehen, der Werkzeuge an einer Greifernut in Nachbarschaft zu einem Aufnahmekonus greift. Die Werkzeuge können in radial nach außen geöffnete Sitze einer Scheibe eingeführt und dort geklemmt werden. Der Werkzeugwechsler kann die Werkzeuge in eine Werkzeugaufnahme einer Bearbeitungsspindel einwechseln.

Aus der DE 10 2006 015 101 A1 ist eine Werkzeugmaschine mit einer Werkzeugwechselvorrichtung bekannt, wobei die Werkzeugwechselvorrichtung seitlich an einen Arbeitsraum angekoppelt ist und ein umlaufendes Kettenmagazin mit vertikaler Orientierung aufweist. Für den Werkzeugwechsel ist ein Shuttle vorgesehen, das Werkzeuge zwischen dem Magazin und einer Wechselposition verfährt, wobei das Werkzeug in der Wechselposition nur mit seinem Schaft durch eine Wechselöffnung in den Arbeitsraum hineinragt und von einer Bearbeitungsspindel abgeholt werden kann. Ein Wechsel zweier Werkzeuge erfolgt durch einen drehbaren Doppelgreifer, der außerhalb des Arbeitsraums positioniert ist.

Die Integration automatisierter Vorrichtungen zum Werkzeugwechsel unterliegt häufig einem Zielkonflikt. Zum einen wird eine möglichst kurze Werkzeugwechselzeit angestrebt, um die Span-zu-Span-Zeiten zu minimieren. Zum anderen werden häufig Werkzeugmagazine mit großer Kapazität zur Aufnahme einer Vielzahl von Werkzeugen angestrebt. Eine weitere Herausforderung ist die Trennung zwischen einem Arbeitsraum der Werkzeugmaschine und dem Werkzeugmagazin. Hier geht es darum, Verschmutzungen und Ähnliches außerhalb des Arbeitsraums zu minimieren.

Vor diesem Hintergrund liegt der vorliegenden Offenbarung die Aufgabe zugrunde, eine Werkzeugwechselvorrichtung sowie eine mit einer Werkzeugwechselvorrichtung versehene Werkzeugmaschine bereitzustellen, wobei einerseits eine Vielzahl von Werkzeugen vorgehalten werden kann und andererseits ein hinreichend schneller Werkzeugwechsel ermöglicht ist. Ferner sollen die Werkzeugwechselvorrichtung und die Werkzeugmaschine insgesamt kompakt gestaltet sein und vorzugsweise einen geringen Grundflächenbedarf aufweisen. Weiter bevorzugt soll es beim Werkzeugwechsel nur zu geringer Interaktion mit dem Arbeitsraum kommen. Im Rahmen der vorliegenden Offenbarung soll ferner ein korrespondierendes Verfahren zum Wechseln eines Werkzeugs angegeben werden.

Gemäß einem ersten Aspekt bezieht sich die vorliegende Offenbarung auf eine Werkzeugwechselvorrichtung für eine Werkzeugmaschine, die Folgendes aufweist:
- ein säulenartig gestaltetes Werkzeugmagazin, das durch einen Drehantrieb um eine vertikal orientierte Magazinachse rotierbar ist und eine Mehrzahl von Aufnahmeplätzen für Werkzeuge aufweist, von denen zumindest einige relativ zueinander entlang der Magazinachse und zumindest einige relativ zueinander um die Magazinachse versetzt angeordnet sind,
- eine einen Transferschlitten aufweisende Transfereinrichtung, die zwischen einer ersten Übergabeposition in Bezug auf das Werkzeugmagazin und einer zweiten Übergabeposition verfahrbar ist, um Werkzeuge zwischen dem Werkzeugmagazin und einem Werkzeughalter der Werkzeugmaschine zu transferieren, und
- einen als Hubantrieb gestalteten Linearantrieb für das Werkzeugmagazin, der das Werkzeugmagazin entlang der Magazinachse relativ zur Transfereinrichtung vertikal verfährt, um gemeinsam mit dem Drehantrieb einen gewählten Aufnahmeplatz in der ersten Übergabeposition bereitzustellen,
   wobei die Aufnahmeplätze dazu ausgebildet sind, Werkzeuge an einer Aufnahmenut der Werkzeuge und in einer horizontalen Orientierung der Längsachse der Werkzeuge, orthogonal zur Magazinachse, zu halten, und
   wobei die Aufnahmeplätze seitlich nach außen geöffnet sind, so dass die Werkzeuge seitlich nach außen, orthogonal zur Magazinachse, entnehmbar sind.

Die Werkzeugwechselvorrichtung kann auch als Werkzeugspeicher- und Wechselvorrichtung bezeichnet werden. Das Werkzeugmagazin dient zur Bereitstellung einer Vielzahl von Aufnahmeplätzen von Werkzeugen. Das Werkzeugmagazin ist in zumindest zwei Bewegungsfreiheitsgraden beweglich. Zum einen kann das Werkzeugmagazin über den Drehantrieb rotiert werden. Ferner ist ein Linearantrieb für eine Bewegung des Werkzeugmagazins entlang von dessen Magazinachse vorgesehen.

Auf diese Weise kann die Transfereinrichtung einfach gestaltet sein. Idealerweise ist es nicht erforderlich, einen Antrieb zum Verfahren der Transfereinrichtung entlang der Magazinachse vorzusehen. Ferner erlaubt diese Gestaltung eine relativ kleine Schnittstelle (Öffnung) zum Arbeitsraum für den Werkzeugwechsel. In einer beispielhaften Ausgestaltung ist der Transferschlitten in einer horizontalen Achse linear verfahrbar, die orthogonal zur Magazinachse orientiert ist.

Das Werkzeugmagazin ist nicht als Kettenmagazin gestaltet, zumindest in beispielhaften Ausgestaltungen. In beispielhaften Ausgestaltungen ist das Werkzeugmagazin in sich steif gestaltet, wobei das Werkzeugmagazin insgesamt etwa säulenartig oder turmartig gestaltet ist.

Gemäß einer beispielhaften Ausgestaltung ist das Werkzeugmagazin ein säulenartig oder turmartig gestaltetes Magazin mit vertikal orientierter Magazinachse. In einem solchen Fall ist der Linearantrieb für das Werkzeugmagazin ein Hubantrieb mit vertikaler Fahrrichtung.

Der Werkzeughalter ist beispielhaft Bestandteil einer Werkzeugspindel. Gemäß diesem Ausführungsbeispiel ist ein im Werkzeughalter sitzendes Werkzeug durch die Werkzeugspindel antreibbar, insbesondere drehbar. Der Werkzeughalter kann jedoch auch zur Aufnahme von nicht rotatorisch angetriebenen Werkzeugen ausgebildet sein, beispielhaft zur Aufnahme von Drehwerkzeugen und ähnlichem.

Gemäß einer weiteren beispielhaften Ausgestaltung ist das Werkzeugmagazin an einer Hubkonsole angeordnet, die beispielsweise über eine Mehrzahl von Reitern an einer oder mehreren Linearführungen verfahrbar angeordnet ist. Beispielhaft sind die Linearführungen als Vertikalführungen gestaltet, so dass das Werkzeugmagazin vertikal verfahrbar ist.

Wenn das Werkzeugmagazin in einer ersten Richtung und einer zweiten Richtung antreibbar ist, insbesondere rotierbar und linear verfahrbar, kann ein anderweitig nicht verbauter Raum für die Bewegung des Werkzeugmagazins genutzt werden. Auf diese Weise kann die Werkzeugmaschine insgesamt kompakt und mit geringem Grundflächenbedarf gestaltet sein. Dies kommt beispielsweise dann zum Tragen, wenn das Werkzeugmagazin über einen Hubantrieb vertikal verfahrbar ist. Sodann kann ein Raum oberhalb des Werkzeugmagazins genutzt werden, wenn das Werkzeugmagazin ausgehend von einer unteren Stellung vertikal nach oben verfahren wird.

In einer beispielhaften Ausgestaltung ist der Linearantrieb zumindest teilweise innerhalb des Werkzeugmagazins angeordnet. Dies betrifft beispielsweise ein Zentrum des säulenartig gestalteten Werkzeugmagazins. Im Zentrum ist beispielsweise eine Spindel eines Gewindetriebs oder Kugelgewindetriebs angeordnet, die durch den Drehantrieb rotatorisch antreibbar ist. Auf diese Weise ist das Werkzeugmagazin an seinem Umfang zugänglich. Der ansonsten zur Aufnahme von Werkzeugen nicht nutzbare Innenraum im Zentrum des Werkzeugmagazins kann für den Linearantrieb genutzt werden. Auf diese Weise ergibt sich eine kompakte Gestaltung.

In einer beispielhaften Ausgestaltung ist die erste Übergabeposition außerhalb des Arbeitsraums, wobei die zweite Übergabeposition innerhalb des Arbeitsraums ist. Der Transferschlitten ist beispielsweise in der ersten Übergabeposition vollständig außerhalb des Arbeitsraums positioniert. In der zweiten Übergabeposition ragt der Transferschlitten beispielsweise zumindest teilweise in den Arbeitsraum hinein. Wenn der Transferschlitten außerhalb des Arbeitsraums positioniert ist, können eine Schnittstelle bzw. ein Zugang zum Arbeitsraum verschlossen sein.

In einer beispielhaften Ausgestaltung erlaubt die Transfereinrichtung einen direkten Transfer von Werkzeugen zwischen dem Werkzeugmagazin und dem Werkzeughalter. Mit anderen Worten übernimmt die Transfereinrichtung Werkzeuge direkt vom Werkzeugmagazin und gibt diese direkt an den Werkzeughalter ab, und umgekehrt. Es sind also keine weiteren Handhabungseinheiten zwischen dem Werkzeugmagazin und der Transfereinrichtung vorgesehen. Gleichermaßen sind keine weiteren Handhabungseinheiten zwischen der Transfereinrichtung und dem Werkzeughalter vorgesehen, zumindest in beispielhaften Ausgestaltungen.

Gemäß einem weiteren Aspekt bezieht sich die vorliegende Offenbarung auf ein Verfahren zum Wechseln eines Werkzeugs mit den folgenden Schritten:
- Bereitstellung eines säulenartig gestalteten Werkzeugmagazins, das um eine vertikal orientierte Magazinachse rotierbar und entlang der Magazinachse vertikal verfahrbar ist, mit einer Mehrzahl von Aufnahmeplätzen für Werkzeuge, von denen zumindest einige relativ zueinander entlang der Magazinachse und zumindest einige relativ zueinander um die Magazinachse versetzt angeordnet sind,
   wobei die Aufnahmeplätze dazu ausgebildet sind, Werkzeuge an einer Aufnahmenut der Werkzeuge und in einer horizontalen Orientierung der Längsachse der Werkzeuge, orthogonal zur Magazinachse, zu halten, und
   wobei die Aufnahmeplätze seitlich nach außen geöffnet sind, so dass die Werkzeuge seitlich nach außen, orthogonal zur Magazinachse, entnehmbar sind
- Bereitstellung einer einen Transferschlitten aufweisenden Transfereinrichtung, die zwischen einer ersten Übergabeposition in Bezug auf das Werkzeugmagazin und einer zweiten Übergabeposition verfahrbar ist, um Werkzeuge zwischen dem Werkzeugmagazin und einem Werkzeughalter der Werkzeugmaschine zu transferieren, und die insbesondere einen Doppelgreifer für einen Werkzeugwechsel mit dem Werkzeughalter sowie einen Versatzschieber mit einer Transferaufnahme für einen Werkzeugwechsel mit dem Werkzeugmagazin umfasst,
- Bewegen des Werkzeugmagazins, um einen Aufnahmeplatz für ein Werkzeug in der ersten Übergabeposition bereitzustellen, und
- Transferieren eines Werkzeugs zwischen der ersten Übergabeposition und der zweiten Übergabeposition,
   wobei in der ersten Übergabeposition die Übergabe direkt zwischen dem Werkzeugmagazin und der Transfereinrichtung erfolgt, insbesondere unter Verwendung des Versatzschiebers, und
   wobei in der zweiten Übergabeposition die Übergabe direkt zwischen der Transfereinrichtung und dem Werkzeughalter erfolgt, insbesondere unter Verwendung des Doppelgreifers.

Das offenbarungsgemäße Verfahren kann analog zur offenbarungsgemäßen Werkzeugwechselvorrichtung gestaltet und detailliert sein. Die offenbarungsgemäße Werkzeugwechselvorrichtung kann analog zum offenbarungsgemäßen Verfahren gestaltet und detailliert sein. Es versteht sich, dass das Verfahren analog auch für das Auswechseln eines Werkzeugs aus einem Werkzeughalter der Werkzeugmaschine zur Ablage im Werkzeugmagazin nutzbar ist. Der Ablauf der Schritte ist entsprechend angepasst. Bei Verwendung eines Doppelgreifers kann in der zweiten Übergabeposition ein Austausch eines benutzten Werkzeugs durch ein ungenutztes Werkzeug erfolgen.

Gemäß einer weiteren beispielhaften Ausgestaltung der Vorrichtung oder des Verfahrens erfolgt die Bewegung der Transfereinrichtung zwischen der ersten Übergabeposition und der zweiten Übergabeposition entlang einer Transferachse, die insbesondere orthogonal zur Magazinachse orientiert ist und eine gestellfeste Führung aufweist, entlang der der Transferschlitten der Transfereinrichtung verfahrbar ist.

Wenn also das Werkzeugmagazin durch den Linearantrieb entlang der Magazinachse verfahrbar ist, können Werkzeuge in verschiedenen Ebenen des Werkzeugmagazins bereitgestellt werden. Dies erfordert keine Bewegung der Transfereinrichtung entlang der Magazinachse, zumindest in beispielhaften Ausgestaltungen. Auf diese Weise kann die Führung der Transfereinrichtung fest an einem Gestell der Werkzeugmaschine oder der Werkzeugwechselvorrichtung angeordnet sein.

Mit anderen Worten ist gemäß einer beispielhaften Ausgestaltung für den Werkzeugwechsel für die Transfereinrichtung lediglich ein kanalartiger Werkzeugtransferraum mit begrenztem Querschnitt vorgesehen, der sich zwischen der ersten Übergabeposition und der zweiten Übergabeposition erstreckt. Mit anderen Worten beansprucht die Transfereinrichtung auch bei einem großen (hohen) Werkzeugmagazin nur einen begrenzten Bauraum in unmittelbarer Nachbarschaft zum Arbeitsraum.

Mit anderen Worten nutzt die Transfereinrichtung für die Bewegung des Transferschlittens entlang der Transferachse eine Führung, die in Bezug auf das Gestell in Richtungen quer zu Führung unbeweglich ist. Dies gilt zumindest für beispielhafte Ausgestaltungen. Es versteht sich, dass die Transfereinrichtung beim Transferschlitten weitere (interne) Bewegungsfreiheitsgrade aufweisen kann, um den Werkzeugwechsel zu unterstützen.

Gemäß einer weiteren beispielhaften Ausgestaltung der Vorrichtung oder des Verfahrens ist die erste Übergabeposition fix, insbesondere in Bezug auf ein Gestell der Werkzeugmaschine oder des Werkzeugmagazins. Mit anderen Worten kann also das Werkzeugmagazin derart angetrieben werden, dass eine gewünschte Ebene (Linearposition) und ein definierter Platz (Drehposition) auf dieser Ebene in der ersten Übergabeposition bereitstehen. Die erste Übergabeposition kann aus Sicht des Werkzeugmagazins durch den Drehantrieb und den Linearantrieb angefahren werden. Auf diese Weise können gewünschte Aufnahmeplätze in die erste Übergabeposition verfahren werden

Bei dem Gestell handelt es sich beispielhaft um ein Maschinengestell oder Maschinenbett der Werkzeugmaschine. Es kann sich jedoch auch um ein Magazingestell handeln, also um ein Gestell der Werkzeugwechselvorrichtung.

In einer beispielhaften Ausgestaltung ist auch die zweite Übergabeposition fix, insbesondere in Bezug auf das Gestell (des Werkzeugmagazins und/oder der Werkzeugmaschine). Auf diese Weise kann die Öffnung zum Arbeitsraum, durch die das Werkzeug zwischen der Transfereinrichtung und dem Werkzeughalter gewechselt wird, hinreichend klein gestaltet sein.

Gemäß einer weiteren beispielhaften Ausgestaltung der Vorrichtung oder des Verfahrens ist ein direkter Wechsel der Werkzeuge zwischen der Transfereinrichtung und den Aufnahmeplätzen des Werkzeugmagazins ermöglicht. Es bedarf also beim Werkzeugmagazin selbst keiner aufwendigen aktiven Handhabungstechnik, um ein Werkzeug freizugeben oder von der Transfereinrichtung zu übernehmen. Dies vereinfacht den Aufbau des Werkzeugmagazins und verkürzt die Bereitstellungszeiten hinsichtlich des gewählten Aufnahmeplatzes. Beispielhaft kann ein Werkzeug seitlich (in Bezug auf eine Längsachse des Werkzeugs) aus einem Aufnahmeplatz herausgezogen oder in den Aufnahmeplatz eingeführt und dort abgesetzt werden. Der eigentliche Trägerschaft wird für die Aufnahme im Werkzeugmagazin nicht unbedingt beansprucht.

Gemäß einer weiteren beispielhaften Ausgestaltung der Vorrichtung oder des Verfahrens umfasst das Werkzeugmagazin zwei oder mehr um die Magazinachse verteilte Segmente mit in Reihe entlang der Magazinachse zueinander versetzten Aufnahmeplätzen. In einer beispielhaften Ausgestaltung sind die Aufnahmeplätze seitlich nach außen geöffnet, so dass Werkzeuge seitlich (orthogonal zur Magazinachse) nach außen entnommen werden können. In einer beispielhaften Ausgestaltung sind die Segmente ähnlich zu Flügeln gestaltet, die um die Magazinachse herum angeordnet sind. Die Segmente weisen jeweils bei dieser Ausführungsform eine Längserstreckung auf, die im Wesentlichen parallel zur Magazinachse ist. In einer beispielhaften Ausgestaltung ist das Werkzeugmagazin ähnlich einem stehenden Schaufelrad gestaltet.

Gemäß einer weiteren beispielhaften Ausgestaltung der Vorrichtung oder des Verfahrens umfassen die Segmente Aufnahmeplätze in Form von nach außen geöffneten Ausnehmungen, die an Aufnahmenuten der Werkzeuge angepasst sind. Werkzeuge können also mit ihren Aufnahmenuten im Werkzeugmagazin sitzen und geführt werden. Die Aufnahmenuten werden beispielhaft auch als Greifernuten bezeichnet. Bei dieser Gestaltung ist zu beachten, dass die Aufnahmenuten beim Sitz der Werkzeuge im Werkzeugmagazin blockiert sind, so dass dort kein Handhabungselement zur Entnahme der Werkzeuge eingreifen kann. Die Gestaltung der Aufnahmeplätze erlaubt es jedoch grundsätzlich, Werkzeuge seitlich aus den Segmenten heraus zu führen. Eine solche Bewegung ist beispielsweise orthogonal zur Magazinachse orientiert.

Die Aufnahmeplätze sind in den Segmenten angeordnet oder ausgebildet. Die Werkzeuge weisen beispielsweise einen Trägerschaft auf, zum Beispiel in Form eines Hohlkegelschafts (HSK), Steilkegelschafts oder dergleichen. An den Trägerschaft schließt sich beispielsweise eine Aufnahmenut an. Im aufgenommenen Zustand in den Aufnahmeplätzen der Segmente sind die Werkzeuge jeweils mit ihrer Längsachse orthogonal zu den Aufnahmeplätzen in den Segmenten orientiert. Die Längsachse der Werkzeuge ist beispielsweise horizontal sowie zur Magazinachse orthogonal orientiert.

Die Werkzeuge sind in den Aufnahmeplätzen kraftschlüssig und/oder formschlüssig gesichert, beispielsweise durch eine Haltefeder. Auf diese Weise ist keine aufwändige Steuerungstechnik oder Antriebstechnik erforderlich. Das Werkzeugmagazin kann einfach gestaltet sein. Wenn die Kraft der Haltefeder durch die Transfereinrichtung überwunden wird, können Werkzeuge in die Aufnahmeplätze eingeführt oder aus diesen herausgenommen werden, insbesondere seitlich (orthogonal zur Magazinachse).

Beispielsweise ist in einem bestückten Zustand zumindest ein Werkzeug mit seiner Aufnahmenut in einem Aufnahmeplatz aufgenommen und gesichert, insbesondere kraftschlüssig und/oder formschlüssig gesichert.

Gemäß einer weiteren beispielhaften Ausgestaltung der Vorrichtung oder des Verfahrens weist die Transfereinrichtung eine Transferaufnahme auf, die insbesondere dazu ausgebildet ist, einen Trägerschaft eines Werkzeugs zu umgreifen. Beispielsweise ist die Transferaufnahme köcherartig gestaltet. Die Transferaufnahme ist an den Trägerschaft des Werkzeugs angepasst.

Mit anderen Worten nutzt also die Transferaufnahme nicht dieselbe Kontur des Werkzeugs wie der Aufnahmeplatz. Dies erlaubt einen direkten Wechsel des Werkzeugs zwischen der Transfereinrichtung mit der Transferaufnahme und dem Werkzeugmagazin mit dem Aufnahmeplatz.

Beispielsweise ist an der Transfereinrichtung, insbesondere am Transferschlitten, eine Transferaufnahme für ein Werkzeug vorgesehen, die ähnlich dem Werkzeughalter einer Werkzeugspindel gestaltet ist und/oder diese zumindest teilweise nachahmt. Bei der Transferaufnahme kann es sich um eine an einen Kegelschaft (HSK oder dergleichen) angepasste Aufnahme handeln.

Mit anderen Worten nutzt also die Transferaufnahme Abschnitte des Werkzeugs, in denen dieses üblicherweise am Werkzeughalter aufgenommen ist. Hingegen nutzt das Werkzeugmagazin andere Abschnitte, beispielsweise Aufnahmenuten der Werkzeuge, die für die Handhabung vorgesehen sind.

Daher kann die Transfereinrichtung unter Nutzung der Transferaufnahme ein Werkzeug aus seinem Sitz im Werkzeugmagazin entnehmen. Wenn das Werkzeug auf diese Weise entnommen und an der Transferaufnahme gehalten ist, kann eine Übergabe an den werkzeugmaschinenseitigen Werkzeughalter erfolgen, bedarfsweise unter Nutzung weiterer Elemente der Transfereinrichtung.

In einer beispielhaften Ausgestaltung ist die Transferaufnahme parallel zur Transferachse orientiert, so dass auch die Längsachse eines aufgenommenen Werkzeugs parallel zur Transferachse orientiert ist. In dieser Orientierung kann das Werkzeug aus dem Werkzeugmagazin entnommen oder in einen Aufnahmeplatz im Werkzeugmagazin abgelegt werden. In einer beispielhaften Ausgestaltung wird diese Orientierung auch für die Übergabe an den Werkzeughalter und für die Entnahme des Werkzeugs aus dem Werkzeughalter beibehalten.

Gemäß einer weiteren beispielhaften Ausgestaltung der Vorrichtung oder des Verfahrens ist am Transferschlitten der Transfereinrichtung eine Versatzachse vorgesehen, die die Transferaufnahme zwischen einer eingerückten Stellung und einer ausgerückten Stellung verfährt. Auf diese Weise kann die Transferaufnahme als Bestandteil des Transferschlittens entlang der gegenüber der Transferachse geneigten Versatzachse bewegt werden. Auf diese Weise wird genügend Hub quer zur Transferachse bereitgestellt, so dass die Transferaufnahme in der ersten Übergabeposition beispielsweise in eine konzentrische Ausrichtung relativ zu einem gewählten Aufnahmeplatz gebracht werden kann.

Die Versatzachse ist beispielsweise gegenüber der Transferachse geneigt, insbesondere orthogonal hierzu orientiert. Das Einrücken und Ausrücken zwischen Trägerschaft und Transferaufnahme erfolgt durch eine angepasste Verfahrbewegung des Transferschlittens entlang der Transferachse.

In der ausgerückten Stellung kann die Transferaufnahme in der ersten Übergabeposition an ein im Werkzeugmagazin bereitgestelltes Werkzeug ankoppeln. Sodann kann die Versatzachse die Transferaufnahme aus der ausgerückten Stellung in die eingerückte Stellung verfahren. Hierdurch kann das Werkzeug seitlich aus seinem Aufnahmeplatz im Segment des Werkzeugmagazins herausfahren.

Wenn die Transferaufnahme ein im Werkzeugmagazin abzulegendes Werkzeug trägt, wird das Werkzeug bei der Bewegung der Versatzachse aus der eingerückten Stellung in die ausgerückte Stellung seitlich in einen Aufnahmeplatz eingefahren, der vom Werkzeugmagazin in der ersten Übergabeposition bereitgestellt wird. Sodann kann die Transferaufnahme entlang der Transferachse (orthogonal zur Versatzrichtung) vom abgelegten Werkzeug entkoppelt werden.

Die Ankoppelbewegung bzw. die Abkoppelbewegung kann durch die (globale) Transferachse des Transferschlittens bereitgestellt werden. Auf diese Weise kann die Transferaufnahme den Trägerschaft des Werkzeugs umgreifen oder von diesem gelöst werden.

Gemäß einer weiteren beispielhaften Ausgestaltung der Vorrichtung oder des Verfahrens weist die Transferaufnahme federnde Rastelemente auf, um ein aufgenommenes Werkzeug zu sichern. Auf diese Weise ist keine komplexe Steuerung mit Aktuator oder dergleichen erforderlich, um das Werkzeug an der Transferaufnahme zu sichern. Stattdessen muss jeweils eine Federkraft überwunden werden, um das Werkzeug mit der Transferaufnahme zu koppeln oder von dieser zu lösen.

Gemäß einer weiteren beispielhaften Ausgestaltung der Vorrichtung oder des Verfahrens sind zumindest einige der Aufnahmeplätze des Werkzeugmagazins mit einer Haltefeder gekoppelt, die ein aufgenommenes Werkzeug mit einem Rastelement im Aufnahmeplatz sichert, wobei die Transfereinrichtung einen Versatzschieber aufweist, der die Transferaufnahme trägt und dazu ausgebildet ist, die Haltefeder auszulenken, um ein Werkzeug im Aufnahmeplatz abzusetzen oder vom Aufnahmeplatz zu lösen.

Mit anderen Worten kann also der Versatzschieber, der die Transferaufnahme umfasst, einen Aufnahmeplatz für ein Werkzeug verriegeln oder entriegeln, um ein Werkzeug dort sicher abzusetzen oder vom Aufnahmeplatz zu übernehmen. Gemäß einer beispielhaften Ausgestaltung weist der Versatzschieber Verdrängungsstücke auf, die Kontaktstücke der Haltefeder der Aufnahmeplätze sowohl bei einer Bewegung des Versatzschiebers entlang der Versatzachse als auch bei einer Bewegung des Versatzschiebers entlang der Transferachse kontaktieren und betätigen können. Dies kann beispielsweise durch eine geeignete Neigung einander kontaktierender Flanken der Kontaktstücke und der Verdrängungsstücke bewerkstelligt werden, so dass sich beispielsweise für die Bewegung entlang der Versatzachse eine rampenartige Bewegungsbahn ergibt, die schlussendlich die Kontaktstücke und damit die Haltefeder in der Transferrichtung auslenken.

Gemäß einer weiteren beispielhaften Ausgestaltung der Vorrichtung oder des Verfahrens weist die Transfereinrichtung einen am Transferschlitten angeordneten Doppelgreifer auf, der insbesondere um eine Schwenkachse schwenkbar ist. Auf diese Weise kann die Transfereinrichtung mit dem Doppelgreifer einen Platz für ein auszuwechselndes Werkzeug und einen Platz für ein einzuwechselndes Werkzeug bereitstellen. Die Werkzeugwechselzeiten können sich reduzieren. Mit geringem Zeitbedarf kann ein im Werkzeughalter sitzendes Werkzeug entnommen und durch ein neues Werkzeug ersetzt werden. Weitere Verfahrbewegungen der Transfereinrichtung wirken sich nicht unmittelbar auf die Span-zu- Span-Zeiten aus.

Beispielsweise ist die Drehachse des Doppelgreifers parallel zur Transferachse orientiert. Damit ist die Versatzachse gegenüber der Drehachse geneigt, insbesondere orthogonal gegenüber der Drehachse orientiert.

Der Doppelgreifer ist beispielsweise dazu ausgestaltet, ein Werkzeug an einer Aufnahmenut zu greifen. Beispielsweise nutzen der Doppelgreifer und die Aufnahmeplätze der Segmente des Werkzeugmagazins dieselbe Aufnahmekontur oder Aufnahmenut des Werkzeugs bzw. von dessen Trägerschaft. Auf diese Weise ist eine direkte Übergabe zwischen Werkzeugmagazin und Doppelgreifer erschwert. Zumindest in beispielhaften Ausgestaltungen wird daher die Transferaufnahme zwischengeschaltet, so dass das Werkzeug ausgehend vom Werkzeugmagazin an die Transferaufnahme übergeben wird und danach mit dem Doppelgreifer von der Transferaufnahme entnehmbar ist. Der Doppelgreifer kann wiederum zum Einwechseln des Werkzeugs in den Werkzeughalter genutzt werden. Beispielhaft handelt es sich um die Werkzeugaufnahme einer Werkzeugspindel.

Unmittelbar vor dem Einwechseln kann der Doppelgreifer an seinem freien Platz ein zuvor in der Werkzeugaufnahme der Werkzeugspindel gehaltenes Werkzeug entnehmen. Dieses zuvor benutzte Werkzeug wird vom Werkzeughalter an den Doppelgreifer übergeben, von diesem an die Transferaufnahme und von dieser schlussendlich an einen freien Aufnahmeplatz im Magazin. Bei einem Wechsel zwischen dem Magazin und dem Werkzeughalter ist also ein Werkzeug zumindest zeitweise an der Transferaufnahme und zeitweise am Doppelgreifer positioniert.

Gemäß einer weiteren beispielhaften Ausgestaltung der Vorrichtung oder des Verfahrens ist am Transferschlitten ferner eine Hubachse vorgesehen, die zumindest dem Doppelgreifer oder der Transferaufnahme zugeordnet ist, um eine Übergabe von Werkzeugen zwischen dem Doppelgreifer und der Transferaufnahme zu ermöglichen. Sowohl der Doppelgreifer als auch die Transferaufnahme sind am Transferschlitten angeordnet, daher kann eine Bewegung des Transferschlittens entlang der Transferachse keine Relativbewegung zwischen dem Doppelgreifer und der Transferaufnahme entlang der Transferachse bewirken. Die Hubachse ist parallel zur Transferachse orientiert, zumindest in beispielhaften Ausgestaltungen. Bei einer horizontal orientierten Transferachse ist folglich auch die Hubachse horizontal orientiert.

Der Doppelgreifer ist beispielsweise dazu ausgebildet, Werkzeuge an einer Aufnahmenut zu greifen. Der Doppelgreifer kann gemäß dieser Ausführungsform seitlich an ein Werkzeug angreifen. Die Transferaufnahme ist beispielsweise dazu ausgebildet, Werkzeuge an ihrem Trägerschaft aufzunehmen. Die Transferaufnahme kann gemäß dieser Ausführungsform in der Längsrichtung des Werkzeugs an dieses angreifen. Eine zusätzliche Hubachse erlaubt bei einer derartigen Konstellation den Wechsel zwischen Transferaufnahme und Doppelgreifer. Die Hubachse bewirkt beispielsweise eine Einfahrbewegung bzw. Ausfahrbewegung zwischen Trägerschaft und Transferaufnahme.

Gemäß einer weiteren beispielhaften Ausgestaltung der Vorrichtung oder des Verfahrens ist die Hubachse dem Doppelgreifer zugeordnet, wobei die Hubachse mit der Schwenkachse des Doppelgreifers zusammenfällt. Auf diese Weise kann sich eine Hubbewegung innerhalb der Transfereinrichtung ergeben, wobei Elemente der Transfereinrichtung, die am Transferschlitten angeordnet sind, relativ zueinander bewegt werden können, und zwar insbesondere parallel zur Transferachse.

Gemäß einer weiteren beispielhaften Ausgestaltung der Vorrichtung oder des Verfahrens betätigt der Transferschlitten bei der Verfahrbewegung zwischen der ersten Übergabeposition und der zweiten Übergabeposition eine den Arbeitsraum schließende Tür, wobei der Transferschlitten insbesondere zumindest zeitweise in den Arbeitsraum hineinragt. Dies ist ohne zusätzlichen Antrieb und folglich ohne entsprechende Steuerung möglich. In einer beispielhaften Ausgestaltung fährt der Transferschlitten aus einer Position außerhalb des Arbeitsraums zumindest zeitweise in eine Position, in der zumindest ein Abschnitt des Transferschlittens in den Arbeitsraum hineinragt. Bei dieser Bewegung wird die Tür geöffnet.

Bei der Tür handelt es sich beispielhaft um eine schwenkbare Klappe oder um eine linear verfahrbare Tür, die vom Transferschlitten bewegt werden kann. Beispielhaft weist der Transferschlitten einen Ausleger mit einem Schiebestück auf, um die Tür zu betätigen. Die Tür ist beispielsweise derart gestaltet, dass ein Schließen selbsttätig schwerkraftunterstützt erfolgen kann, wenn der Transferschlitten vollständig außerhalb des Arbeitsraums positioniert ist. Dies hat den Vorteil, dass die Öffnung zum Arbeitsraum automatisch geschlossen wird, wenn der Transferschlitten aus der zweiten Übergabeposition in die erste Übergabeposition verfahren wird.

Gemäß einer weiteren beispielhaften Ausgestaltung der Vorrichtung oder des Verfahrens ist dem Werkzeugmagazin ein insbesondere gestellfestes Lesegerät zur Werkzeugidentifikation zugeordnet, wobei das Werkzeugmagazin entlang der Magazinachse verfahren sowie um die Magazinachse rotiert wird, um einen gewählten Aufnahmeplatz in einen Erfassungsbereich des Lesegerätes zu bringen. Da das Werkzeugmagazin entlang zumindest zwei Achsen beweglich ist, können auch mit einem Lesegerät mit einem begrenzten Erfassungsbereich sämtliche Werkzeugplätze im Werkzeugmagazin erfasst werden. Das Lesegerät ist beispielsweise zur optischen Erfassung (Barcode), Erfassung elektromagnetischer Signale (RFID) oder in ähnlicher Weise ausgestaltet.

Gemäß einer weiteren beispielhaften Ausgestaltung der Vorrichtung oder des Verfahrens weist das Werkzeugmagazin eine Zugangstür auf, durch die eine Mehrzahl von Aufnahmeplätzen, insbesondere entlang der Magazinachse zueinander versetzten Aufnahmeplätzen, von außen zugänglich ist. Auf diese Weise wird ein Blockrüsten ermöglicht, das Werkzeugmagazin kann durch die Zugangstür bestückt oder geleert werden. Für den Fall, dass die Erstreckung des Werkzeugmagazins entlang der Magazinachse größer als eine durch die Zugangstür freigegebene Öffnung ist, kann das Werkzeugmagazin durch den Linearantrieb verfahren werden. Ferner kann der Drehantrieb genutzt werden, um gewünschte Aufnahmeplätze im Bereich der Zugangstür bereitzustellen.

Gemäß einem weiteren Aspekt bezieht sich die vorliegende Offenbarung auf eine Werkzeugmaschine mit einem Gestell, zumindest einem Werkstückhalter zur Aufnahme eines Werkstücks, zumindest einem Werkzeughalter zur Aufnahme eines Werkzeugs, und mit einer Werkzeugwechselvorrichtung gemäß zumindest einer der hierin beschriebenen Ausgestaltungen, wobei der Werkzeughalter für einen Werkzeugwechsel relativ zum Gestell in die zweite Übergabeposition verfahrbar ist.

Die Transfereinrichtung der Werkzeugwechselvorrichtung kann Werkzeuge direkt mit dem Werkzeughalter austauschen. Es ist auch bei einem großen Werkzeugmagazin mit beträchtlicher Kapazität nur eine relativ kleine Zugangsöffnung zum Arbeitsraum für den Werkzeugwechsel erforderlich.

Gemäß einer beispielhaften Ausgestaltung der Werkzeugmaschine ist der Werkzeughalter schwenkbar, um den Werkzeughalter in der zweiten Übergabeposition in eine Übergabeorientierung zum Werkzeugwechsel zu bringen, wobei die Übergabeorientierung des Werkzeughalters insbesondere eine Ausrichtung parallel zur Transferachse umfasst. Dies betrifft beispielsweise einen Wechsel zwischen einer vertikalen Orientierung und einer horizontalen Orientierung. Allgemein kann ein derartiger Bewegungsfreiheitsgrad auch bei der Bearbeitung genutzt werden.

Gemäß einer weiteren beispielhaften Ausgestaltung der Werkzeugmaschine ist der Werkzeughalter Bestandteil einer schwenkbaren Werkzeugspindel, wobei der Werkzeughalter zur Aufnahme eines Trägerschafts des Werkzeugs ausgebildet ist, und wobei der Trägerschaft eines aufgenommenen Werkzeugs konzentrisch im Werkzeughalter platziert ist. Die schwenkbare Werkzeugspindel kann in eine für den Werkzeugwechsel günstige Orientierung, beispielsweise eine horizontale Orientierung, verfahren werden.

Gemäß einer weiteren beispielhaften Ausgestaltung der Werkzeugmaschine ist der Werkstückhalter einer Werkstückspindel zugeordnet, die zur Rotation von Werkstücken um eine insbesondere zur Transferachse parallel orientierten Achse ausgebildet ist, wobei der Werkzeughalter in zumindest drei Achsen relativ zum Werkstückhalter verfahrbar ist. Dies erlaubt eine günstige Anordnung des Werkzeugmagazins sowie der Transfereinrichtung. Eine Werkzeugmaschine mit Werkzeugspindel und Werkstückspindel erlaubt verschiedene Drehbearbeitungen, Fräsbearbeitungen und Ähnliches, wobei eine große Gestaltungsfreiheit gegeben ist.

In einer beispielhaften Ausgestaltung der Werkzeugmaschine ist die Werkzeugspindel relativ zum Gestell in drei Achsen linear verfahrbar und in einer Achse verschwenkbar. Die Schwenkachse ermöglicht die Übergabeorientierung des Werkzeughalters. Die Linearachsen erlauben ein Anfahren der zweiten Übergabeposition für den Werkzeugwechsel.

Gemäß einer weiteren beispielhaften Ausgestaltung ist das Werkzeugmagazin benachbart zur Werkstückspindel außerhalb des Arbeitsraums angeordnet, wobei sich ein von der Transfereinrichtung genutzter Werkzeugtransferraum oberhalb der Werkstückspindel zwischen dem Arbeitsraum und dem Werkzeugmagazin erstreckt. Auf diese Weise sitzt die Transfereinrichtung in einem anderweitig nicht benötigten Bereich der Werkzeugmaschine. Da für das Werkzeugmagazin ein Drehantrieb und ein Hubantrieb vorgesehen ist, können gewünschte Aufnahmeplätze des Werkzeugmagazins der Transfereinrichtung in der ersten Übergabeposition bereitgestellt werden.

In einer beispielhaften Ausgestaltung ist die Werkstückspindel horizontal orientiert. In einer beispielhaften Ausgestaltung ist der beispielsweise als Werkzeugspindel ausgestaltete Werkzeughalter oberhalb der Werkzeugspindel bzw. oberhalb eines eingespannten Werkzeugs orientiert.

In einer weiteren beispielhaften Ausgestaltung der Werkzeugmaschine liegt dem Werkstückhalter ein Gegenhalter in Form eines sekundären Werkstückhalters gegenüber, wobei der Werkstückhalter und der sekundäre Werkstückhalter konzentrisch zueinander orientiert sind, wobei der Werkzeughalter und der sekundäre Werkstückhalter zumindest in einer Basisorientierung vom Werkzeugmagazin beabstandet sind, und wobei der Werkstückhalter dem Werkzeugmagazin benachbart ist. Die Basisorientierung des Werkzeughalters ist beispielsweise eine vertikale Orientierung des Werkzeughalters mit eingespanntem Werkzeug, in der der Werkzeughalter eine Bearbeitung durchführen kann. Die Basisorientierung des sekundären Werkstückhalters ist beispielsweise derart vom (primären) Werkstückhalter beabstandet, dass zwischen den beiden Werkstückhaltern ein Werkstück eingespannt werden kann.

Der sekundäre Werkstückhalter ist beispielsweise als Gegenspindel oder als Reitstock gestaltet. Der sekundäre Werkstückhalter ist üblicherweise mit einem größeren Abstand vom Werkzeugmagazin angeordnet als der (primäre) Werkstückhalter. Auf diese Weise können das Werkzeugmagazin und insbesondere die Transfereinrichtung in einem Bereich angeordnet werden, der nicht vom sekundären Werkstückhalter und ebenso wenig vom sekundären Werkzeughalter beansprucht wird.

Gemäß einer weiteren beispielhaften Ausgestaltung umfasst die Werkzeugmaschine ferner einen sekundären Werkzeughalter, der in zumindest zwei Achsen relativ zum Gestell verfahrbar ist, wobei der Werkzeughalter und der sekundäre Werkzeughalter einander gegenüberliegend orientiert sind. Beispielsweise sind sowohl der (primäre) Werkzeughalter als auch der sekundäre Werkzeughalter in einer Basisorientierung jeweils vertikal orientiert. Der sekundäre Werkzeughalter kann auch als sogenannte Überkopfspindel gestaltet sein. In einer beispielhaften Ausgestaltung ist der (primäre) Werkzeughalter oberhalb des Werkstücks und der sekundäre Werkzeughalter unterhalb des Werkstücks angeordnet.

Mit anderen Worten kann der "erste" Werkzeughalter auch als primärer Werkzeughalter bezeichnet werden. Die Begriffe "primär" und "sekundär" dienen lediglich zur Unterscheidung und legen nicht notwendigerweise eine qualitative oder quantitative Reihenfolge fest.

Weitere Vorteile ergeben sich aus der nachfolgenden Beschreibung mehrerer bevorzugter Ausführungsbeispiele unter Bezugnahme auf die Zeichnungen. Es zeigen:
- Fig. 1:: eine vereinfachte frontale Ansicht einer Werkzeugmaschine mit Werkzeugwechselvorrichtung;
- Fig. 2: eine vereinfachte Draufsicht der Anordnung gemäß Fig. 1, mit teilweise entfernter Einhausung;
- Fig. 3:: eine perspektivische Ansicht der Werkzeugmaschine gemäß den Figuren 1 und 2, mit teilweise ausgeblendeter Einhausung sowie unter Auslassung der Werkzeugwechselvorrichtung;
- Fig. 4:: eine frontale Teilansicht einer Werkzeugmaschine zur Veranschaulichung eines Werkzeugwechsels;
- Fig. 5:: eine perspektivische Ansicht einer Werkzeugwechselvorrichtung mit Werkzeugmagazin und Transfereinrichtung;
- Fig. 6:: eine auf Fig. 5 basierende perspektivische Darstellung zur Veranschaulichung von Bewegungsfreiheitsgraden des Werkzeugmagazins;
- Fig. 7:: eine perspektivische Detailansicht einer Transfereinrichtung;
- Fig. 8:: eine weitere perspektivische Detailansicht auf Basis der Ansicht gemäß Fig. 7, zur Veranschaulichung der Funktionsweise der Transfereinrichtung;
- Fig. 9:: eine vereinfachte Ansicht einer mit einem Werkzeugmagazin zusammenwirkenden Transfereinrichtung, von unten her;
- Fig. 10:: eine perspektivische Teilansicht von Komponenten der Transfereinrichtung sowie des Werkzeugmagazins,
- Fig. 11:: eine weitere Teilansicht auf Basis der Anordnung gemäß Fig. 10 mit geänderter Ansichtsorientierung;
- Fig. 12:: eine schematische, geschnittene Teilansicht auf Basis der Anordnung gemäß Fig. 10;
- Fig. 13:: eine perspektivische Teilansicht eines Doppelgreifers der Transfereinrichtung; und
- Fig. 14:: ein vereinfachtes Blockdiagramm zur Veranschaulichung einer beispielhaften Ausgestaltung eines Verfahrens zum Wechseln eines Werkzeugs einer Werkzeugmaschine.

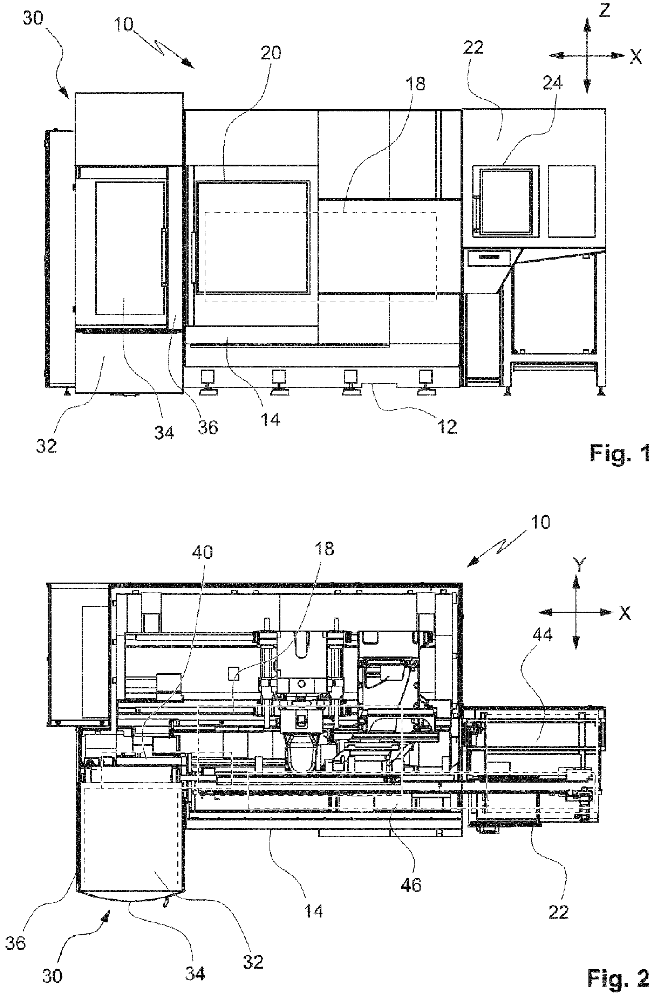

Fig. 1 veranschaulicht anhand einer frontalen Darstellung eine insgesamt mit 10 bezeichnete Werkzeugmaschine. Die Grundstruktur der in Fig. 1 gezeigten Werkzeugmaschine 10 wird mit ergänzender Bezugnahme auf die Figuren 2-4 veranschaulicht.

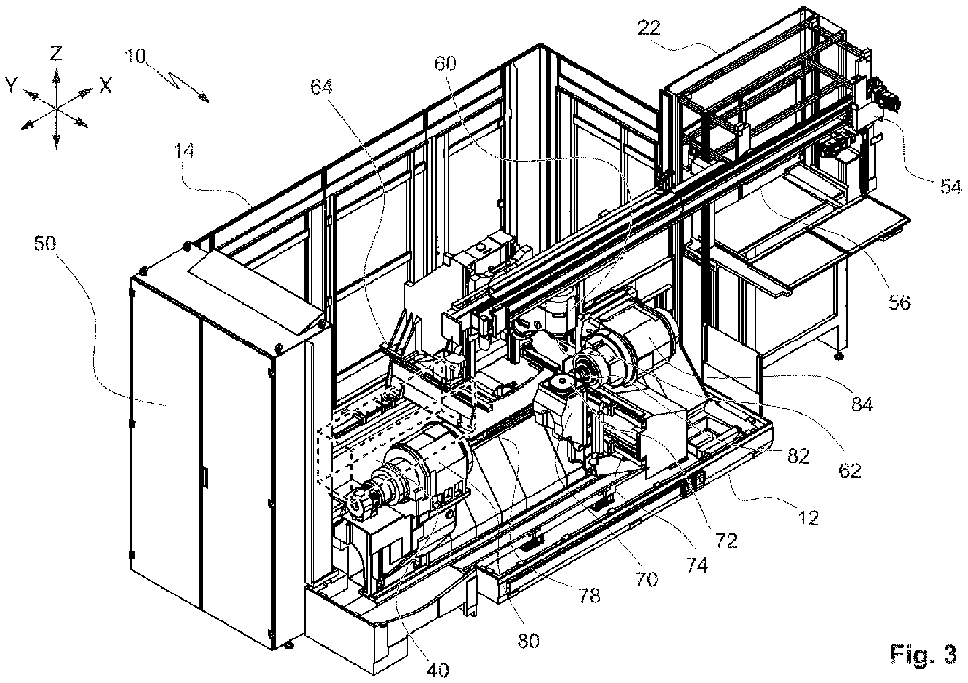

In zumindest einigen der Figuren ist aus Veranschaulichungsgründen ein kartesisches Koordinatensystem X-Y-Z dargestellt. Das Koordinatensystem dient zur Veranschaulichung grundlegender Orientierungen und Bewegungsachsen der Werkzeugmaschine 10 sowie von deren Komponenten. Eine mit X bezeichnete Achse kennzeichnet allgemein eine Längserstreckung. Eine mit Y bezeichnete Achse (vergleiche Fig. 2 und Fig. 3) kennzeichnet allgemein eine Tiefenerstreckung. Im Ausführungsbeispiel definieren die Achsen X und Y gemeinsam eine Horizontalebene. Eine mit Z bezeichnete Achse gekennzeichnet allgemein eine Höhenerstreckung. Das Koordinatensystem X-Y-Z dient in erster Linie zur Veranschaulichung und ist nicht ihn einschränkender Weise zu verstehen. Es versteht sich, dass auch andere Koordinatensysteme zur Beschreibung der Werkzeugmaschine 10 und weiterer Komponenten nutzbar sind. Der Fachmann kann entsprechende Transformationen vornehmen.

Die Werkzeugmaschine 10 umfasst ein Gestell 12, das auch als Bett bezeichnet werden kann. Ferner ist eine Einhausung 14 vorgesehen, die einen Arbeitsraum 18 und weitere Komponenten der Werkzeugmaschine 10 umgibt und zumindest während der Bearbeitung von einer Umgebung abschirmt. Der Arbeitsraum 18 ist in Fig. 1 und Fig. 2 jeweils durch einen gestrichelten Block angedeutet. Der Arbeitsraum 18 ist üblicherweise der Bereich, in dem die Werkzeugmaschine 10 zu Bearbeitungszwecken auf ein Werkstück (nicht dargestellt) einwirken kann. In Fig. 1 ist ferner mit 20 eine Zugangstür zum Arbeitsraum 18 angedeutet.

Die Werkzeugmaschine 10 umfasst im Ausführungsbeispiel ferner ein sogenanntes Werkstücktransfermodul 22. Das Werkstücktransfermodul 22 dient beispielsweise zum Abführen bearbeiteter Werkstücke. Fallweise kann das Werkstücktransfermodul 22 auch zum Zuführen unbearbeiteter Werkstücke dienen. Im Ausführungsbeispiel gemäß Fig. 1 ist mit 24 eine Zugangstür zum Werkstücktransfermodul 22 angedeutet.

Die Werkzeugmaschine 10 umfasst ferner eine Werkzeugwechselvorrichtung 30. Die Werkzeugwechselvorrichtung 30 umfasst ein Werkzeugmagazin 32. Im Ausführungsbeispiel gemäß den Figuren 1 und 2 ist das Werkzeugmagazin 32 in einem durch eine Zugangstür 34 zugänglichen Gehäuse 36 angeordnet. Demgemäß zeigt Fig. 1 ein Ausführungsbeispiel der Werkzeugmaschine 10 in frontaler Ansicht, wobei der Arbeitsraum 18 über die Zugangstür 20, das Werkstücktransfermodul 22 über die Zugangstür 24 sowie das Werkzeugmagazin 32 über die Zugangstür 34 zugänglich sind.

Fig. 2 zeigt eine Draufsicht auf die Werkzeugmaschine 10 gemäß Fig. 1, wobei die Einhausung 14 teilweise ausgeblendet ist, so dass Komponenten der Werkzeugmaschine 10 sichtbar sind. Der Arbeitsraum 18 ist durch einen gestrichelten Block angedeutet. Ferner erstreckt sich zwischen dem Werkzeugmagazin 32 und dem Arbeitsraum 18 ein Werkzeugtransferraum 40, der ebenso durch einen gestrichelten Block angedeutet ist. Der Werkzeugtransferraum 40 dient zum Transfer von Werkzeugen zwischen dem Werkzeugmagazin 32 und einem Werkzeughalter im Inneren des Arbeitsraums 18. Der Werkzeugtransferraum 40 und der Arbeitsraum 18 überlappen sich in der in Fig. 2 gezeigten Ausgestaltung.

In Fig. 2 ist ferner mit 44 ein Bereitstellungsraum für Werkstücke durch einen gestrichelten Block angedeutet. Im Bereitstellungsraum 44 können zu bearbeitende Werkstücke oder bearbeitete Werkstücke für weitere Handhabungsoperationen bereitgestellt werden. Zwischen dem Werkstücktransfermodul 22 und dem Arbeitsraum 18 erstreckt sich ein Werkstücktransferraum 46, der ebenso durch einen gestrichelten Block angedeutet ist. Im Werkstücktransferraum 46 können Werkstücke zwischen dem Arbeitsraum 18 und dem Bereitstellungsraum 44 verfahren werden. Das Werkstücktransfermodul 22 kann grundsätzlich sowohl zum Laden von Werkstücken als auch zum Entladen von Werkstücken genutzt werden. Es ist jedoch auch vorstellbar, zu bearbeitende Werkstücke anderweitig zuzuführen. Dies kann etwa über einen Stangenlader oder dergleichen erfolgen.

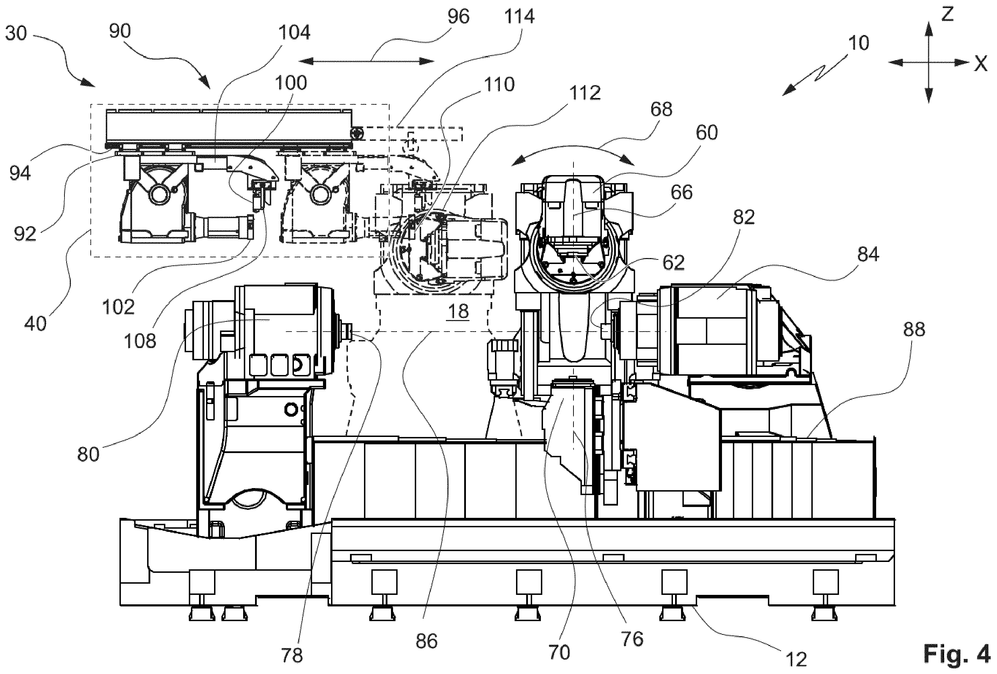

Basierend auf der Darstellung gemäß Fig. 1 und Fig. 2 zeigt Fig. 3 eine perspektivische Ansicht der Werkzeugmaschine 10, wobei die Werkzeugwechselvorrichtung 30 mit dem Werkzeugmagazin 32 aus Veranschaulichungsgründen ausgeblendet ist. Ferner ist die Einhausung 14 teilweise ausgeblendet, so dass interne Komponenten der Werkzeugmaschine 10 sichtbar sind. Ergänzend wird auf die frontale Teilansicht der Werkzeugmaschine 10 gemäß Fig. 4 verwiesen, die insbesondere den Arbeitsraum 18 mit dort angeordneten Komponenten zeigt.

In Fig. 3 ist eine Steuereinheit 50 der Werkzeugmaschine 10 dargestellt. Die Steuereinheit 50 dient zur Steuerung von Komponenten der Werkzeugmaschine 10, dies umfasst bedarfsweise auch eine Steuerung des Werkstücktransfermoduls 22 und/oder der Werkzeugwechselvorrichtung 30.

Im Ausführungsbeispiel gemäß Fig. 3 ist das Werkstücktransfermodul 22 mit einer an einem Ladeportal 56 angeordneten verfahrbaren Ladeeinheit 54 versehen oder gekoppelt. Das Ladeportal 56 erstreckt sich durch den Werkstücktransferraum 46, vergleiche Fig. 2. Auf diese Weise können Werkstücke zwischen dem Arbeitsraum 18 und dem Bereitstellungsraum 44 bzw. dem Werkstücktransfermodul 22 verfahren werden.

Im Arbeitsraum 18 der Werkzeugmaschine 10 ist eine Werkzeugspindel 60 vorgesehen, die einen Werkzeughalter 62 trägt. Die Werkzeugspindel 60 kann auch als primäre Werkzeugspindel bezeichnet werden. Der Werkzeughalter 62 kann auch als primärer Werkzeughalter bezeichnet werden. Der Werkzeughalter 62 dient zur Aufnahme eines Werkzeugs. Für die Werkzeugspindel 60 ist eine Kinematik 64 vorgesehen, die im Ausführungsbeispiel eine Linearbewegung der Werkzeugspindel 60 in drei Achsen (X, Y, Z) ermöglicht. Ferner kann die Kinematik 64 eine Schwenkbewegung der Werkzeugspindel 60 ermöglichen, beispielsweise um die Y-Achse (sogenannte B-Achse). In Fig. 4 veranschaulicht ein gekrümmter Doppelpfeil einen solchen Schwenkantrieb 68. Die Werkzeugspindel 60 ist dazu ausgebildet, ein im Werkzeughalter 62 angeordnetes Werkzeug rotatorisch um eine Längsachse 66 anzutreiben.

Die Figuren 3 und 4 veranschaulichen ferner eine beispielhafte Ausgestaltung, bei der zusätzlich zur Werkzeugspindel 60 eine weitere Werkzeugspindel 70 mit einem Werkzeughalter 72 vorgesehen ist. Die Werkzeugspindel 70 kann auch als sekundäre Werkzeugspindel oder als Überkopfspindel bezeichnet werden. Der Werkzeughalter 72 kann auch als sekundärer Werkzeughalter bezeichnet werden. Im Ausführungsbeispiel ist für die Werkzeugspindel 70 eine Kinematik 74 vorgesehen, die beispielsweise eine translatorische (lineare) Bewegung in zwei Achsen (X, Y) oder gegebenenfalls in drei Achsen (X, Y, Z) ermöglicht. Die Werkzeugspindel 70 kann den Werkzeughalter 72 und ein darin angeordnetes Werkzeug um eine Längsachse 76 rotatorisch antreiben.

Die Werkzeugmaschine 10 umfasst ferner einen Werkstückhalter 78, der einer Werkstückspindel 80 zugeordnet ist. Die Werkstückspindel 80 kann auch als Hauptspindel oder primäre Werkstückspindel bezeichnet werden. Der Werkstückhalter 78 kann auch als primärer Werkstückhalter 78 bezeichnet werden. Der Werkstückhalter 78 dient dazu, ein Werkstück zu halten. Das Werkstück ist beispielsweise stangenartig oder als Futterteil gestaltet. Das Werkstück kann zumindest teilweise rotationssymmetrisch gestaltet sein, dies ist jedoch keine obligatorische Voraussetzung. Die Werkstückspindel 80 kann das Werkstück um eine Längsachse 86 antreiben, vergleiche hierzu Fig. 4. Im Ausführungsbeispiel ist die Werkstückspindel 80 fest am Gestell 12 angeordnet.

Der Werkstückspindel 80 gegenüberliegend ist eine mit einem Werkstückhalter 82 versehene Werkstückspindel 84 am Gestell 12 vorgesehen. Die Werkstückspindel 84 ist im Ausführungsbeispiel relativ zum Gestell in der X-Richtung verfahrbar, vergleiche eine in Fig. 4 mit 88 angedeutete Kinematik. Auf diese Weise kann der Abstand zwischen der Werkstückspindel 80 und der Werkstückspindel 84 variiert werden. Die Werkstückspindel 84 kann auch als Gegenspindel oder sekundäre Werkstückspindel bezeichnet werden. Der Werkstückhalter 82 kann auch als sekundärer Werkstückhalter bezeichnet werden. Die Werkstückhalter 78, 82 sind im Ausführungsbeispiel konzentrisch zueinander orientiert. Die Werkstückhalter 78, 82 können gemeinsam ein Werkstück halten und klemmen. Es ist jedoch grundsätzlich auch vorstellbar, dass jeder der beiden Werkstückhalter 78, 82 ein separates Werkstück hält und klemmt. Demgemäß ist es vorstellbar, dass auch die Werkstückspindel 84 mit einem Antrieb zum rotatorischen Antrieb eines Werkstücks um die Längsachse 86 versehen ist.

Fig. 3 veranschaulicht anhand eines perspektivisch gezeichneten Quaders aus gestrichelten Linien eine denkbare Position für den Werkzeugtransferraum 40, vergleiche hierzu auch Fig. 2. Der Werkzeugtransferraum 40 kann folglich oberhalb der Werkstückspindel 80 angeordnet sein. Dieser Bereich steht für einen Werkzeugtransfer zwischen Arbeitsraum 18 und Werkzeugmagazin 32 zur Verfügung.

Fig. 4 veranschaulicht eine zumindest teilweise im Werkzeugtransferraum 40 angeordnete Transfereinrichtung 90, die gemeinsam mit dem Werkzeugmagazin 32 einen Bestandteil der Werkzeugwechselvorrichtung 30 bildet.

Im Ausführungsbeispiel umfasst die Transfereinrichtung 90 einen Transferschlitten 92, der an einer Führung 94 verfahrbar ist. Im Ausführungsbeispiel ist die Führung 94 eine Horizontalführung. Die Führung 94 erstreckt sich im Werkzeugtransferraum 40, vergleiche Fig. 2 und Fig. 3. Eine Transferbewegung wird durch eine Transferachse 96 veranschaulicht. Im Ausführungsbeispiel ist die Transferachse 96 parallel zur X-Achse orientiert.

Der Transferschlitten 92 trägt eine an einem Ausleger 104 gelagerte Transferaufnahme 100. Ferner trägt der Transferschlitten 92 einen Doppelgreifer 102, der der Transferaufnahme 100 gegenüberliegt. In Fig. 4 ist der Transferschlitten 92 in einer ersten Übergabeposition 108 dargestellt. Eine gestrichelte Darstellung veranschaulicht eine zweite Übergabeposition 110. Der Transferschlitten 92 ist zwischen der ersten Übergabeposition 108 und der zweiten Übergabeposition 110 entlang der Transferachse 96 verfahrbar. Auf diese Weise können Werkzeuge zwischen dem Werkzeugmagazin 32 und dem Arbeitsraum 18 gewechselt werden.

In der zweiten Übergabeposition 110 ragt der Transferschlitten 92 zumindest teilweise in den Arbeitsraum 18 hinein, um dort ein Werkzeug an den Werkzeughalter 62 der Werkzeugspindel 60 zu übergeben. Unter Nutzung der Kinematik 64 und des Schwenkantriebs 68 kann die Werkzeugspindel 60 mit dem Werkzeughalter 62 in Richtung auf eine Wechselposition 112 verfahren werden (in Fig. 4 durch eine gestrichelte Darstellung angedeutet). In der Wechselposition 112 ist der Werkzeughalter 62 derart ausgerichtet, dass die Längsachse 66 parallel zur Transferachse 96 orientiert ist. Auf diese Weise kann ein Werkzeug in der zweiten Übergabeposition 110 einfach zwischen dem Transferschlitten 92 und dem Werkzeughalter 62 der Werkzeugspindel 60 gewechselt werden.

In Fig. 4 ist ferner anhand einer gestrichelten Darstellung eine mit 114 bezeichnete Tür für den Arbeitsraum 18 angedeutet. Die Tür 114 ist im Ausführungsbeispiel verschwenkbar. Die Tür 114 wird bei der Bewegung des Transferschlittens 92 aus der ersten Übergabeposition 108 in die zweite Übergabeposition 110 durch den Transferschlitten 92 betätigt. Wenn der Transferschlitten 92 vollständig aus dem Arbeitsraum 18 zurückgezogen ist, kann sich die Tür 114 selbsttätig schließen.

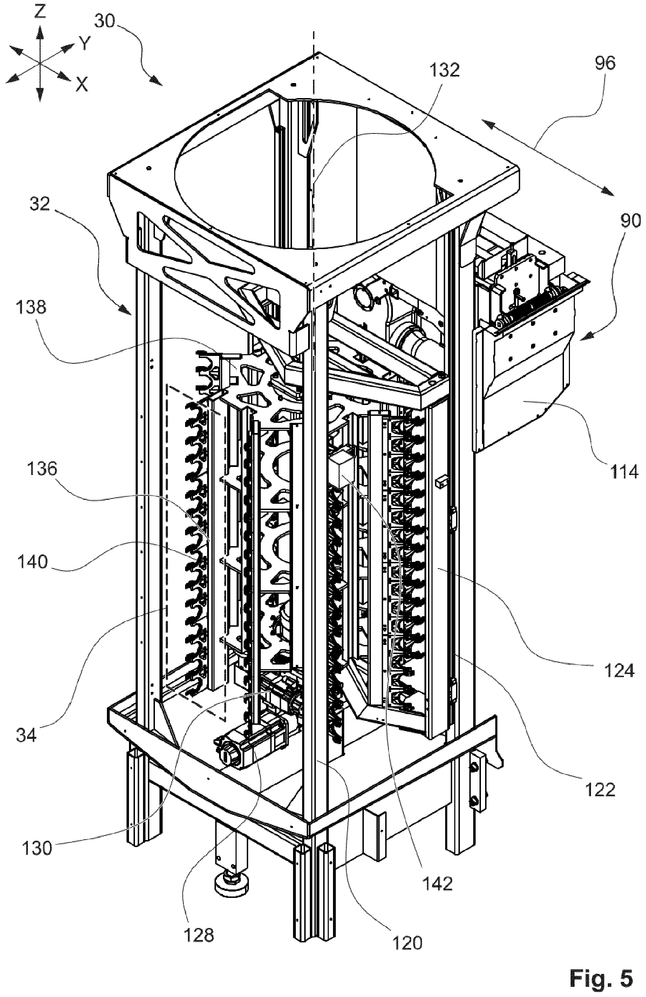

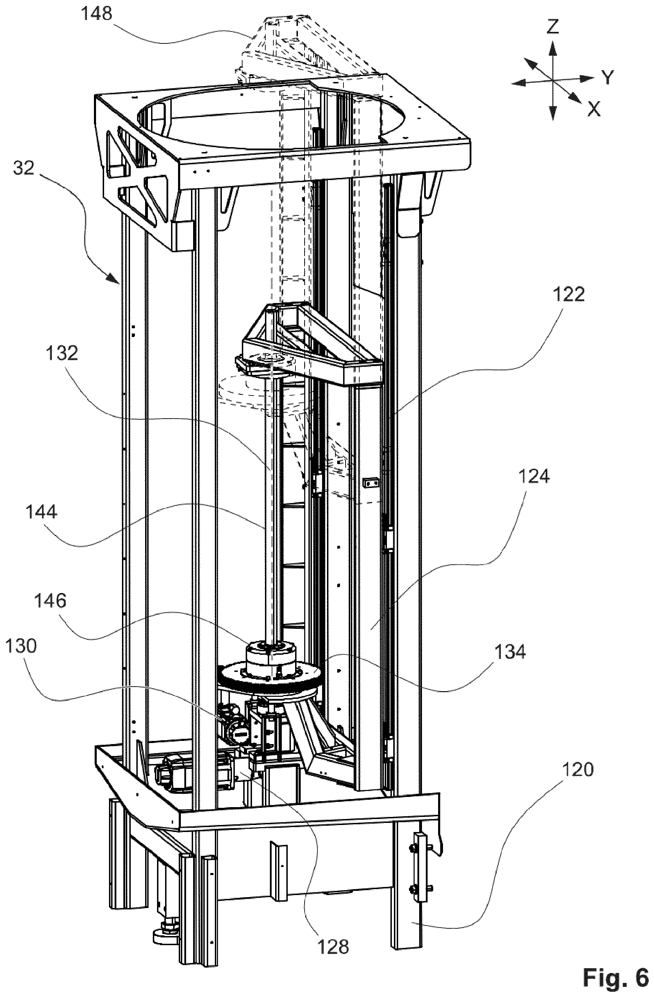

Mit Bezugnahme auf die Figuren 5 und 6 wird eine beispielhafte Ausgestaltung eines Werkzeugmagazins 32 der Werkzeugwechselvorrichtung 30 veranschaulicht. Das Werkzeugmagazin 32 ist etwa turmartig oder säulenartig gestaltet. In Fig. 5 ist mit 34 anhand eines gestrichelten Blocks eine denkbare Position einer Zugangstür 34 angedeutet. Ein beispielsweise in Fig. 2 gezeigtes Gehäuses 36 ist in den Figuren 5 und 6 ausgeblendet.

Das Werkzeugmagazin 32 ruht auf einem Gestell 120. Bei dem Gestell 120 kann es sich um einen Bestandteil des Gestells 12 der Werkzeugmaschine handeln. Das Gestell 120 kann jedoch auch ein separates Magazingestell sein. Im Ausführungsbeispiel ist das Gestell 120 turmartig gestaltet. Am Gestell 120 ist im Ausführungsbeispiel die Werkzeugwechselvorrichtung 90 angeordnet, insbesondere gestellfest. Mit anderen Worten trägt das Gestell 120 die Führung 94 (vergleiche Fig. 4) für den Transferschlitten 92. Fig. 5 zeigt ferner die Tür 114, die bei einer Bewegung des Transferschlittens 92 entlang der Transferachse 96 durch den Transferschlitten 92 betätigt wird.

Am Gestell 120 ist im Ausführungsbeispiel eine vertikale Führung 122 angeordnet. Das Werkzeugmagazin 32 sitzt auf einer Konsole 124, die entlang der Führung 122 vertikal verfahrbar ist (parallel zur Z-Richtung). Für diese Bewegung ist ein Linearantrieb 128 vorgesehen, der als Hubantrieb bezeichnet werden kann. Die Bewegung des Werkzeugmagazins 32 erfolgt entlang einer Magazinachse 132, vergleiche Fig. 5 und Fig. 6.

Zusätzlich zum Linearantrieb 128 ist ein Drehantrieb 130 vorgesehen, der dazu ausgebildet ist, das Werkzeugmagazin 32 um die Magazinachse 132 zu rotieren. Das Werkzeugmagazin 32 umfasst im Ausführungsbeispiel eine Mehrzahl von Segmenten 136, die um die Magazinachse 132 verteilt angeordnet sind. Die Segmente 136 sind an Trägerscheiben 138 befestigt, die entlang der Magazinachse 132 versetzt zueinander angeordnet sind. Im Ausführungsbeispiel sind die Segmente 136 vergleichbar den Schaufeln eines Schaufelrades gestaltet. Die Segmente 136 tragen jeweils eine Mehrzahl von Aufnahmeplätzen 140. Die Aufnahmeplätze 140 dienen zur Aufnahme von Werkzeugen. Die Aufnahmeplätze 140 sind entlang der Magazinachse 132 sowie um die Magazinachse 132 verteilt angeordnet. Auf diese Weise kann das Werkzeugmagazin 32 eine Vielzahl von Aufnahmeplätzen 140 zur Aufnahme von Werkzeugen bereitstellen.

Gemeinsam können der Linearantrieb 128 und der Drehantrieb 130 das Werkzeugmagazin 32 verfahren, um einen gewünschten Aufnahmeplatz 140 für ein Werkzeug in der ersten Übergabeposition 108 (vergleiche Fig. 4) bereitzustellen, so dass das Werkzeug durch die Transfereinrichtung 90 entnommen und transferiert werden kann. Gleichermaßen kann ein leerer Aufnahmeplatz 140 in der ersten Übergabeposition 108 bereitgestellt werden, um dort mit der Transfereinrichtung 90 ein Werkzeug abzusetzen.

Daneben kann das Werkzeugmagazin 32 durch den Linearantrieb 128 und den Drehantrieb 130 angesteuert werden, um einen oder mehrere Aufnahmeplätze 140 im Bereich der Zugangstür 34 zu positionieren. Auf diese Weise wird ein Rüstvorgang von außen ermöglicht. Wenn eine Mehrzahl von Aufnahmeplätzen 140 bestückt wird, kann dies als Blockrüsten bezeichnet werden.

Fig. 6 zeigt, dass der Linearantrieb 128 mit einer Spindel 144 gekoppelt ist, um die Spindel 144 rotatorisch anzutreiben. Im Ausführungsbeispiel sitzt die Spindel 144 im Zentrum des Werkzeugmagazins 32. Auf der Spindel 144 sitzt eine Basis 146, die das Werkzeugmagazin 32 bzw. dessen Konsole 124 trägt. Wenn die Spindel 144 durch den Linearantrieb 128 angetrieben wird, verfährt die Basis 146 entlang der Spindel 144. Auf diese Weise kann die Konsole 124 mit dem Werkzeugmagazin 32 entlang der Magazinachse 132 (parallel zur Z-Achse) verfahren werden. Vergleiche auch die gestrichelte Darstellung in Fig. 6, die einen angehobenen Zustand 148 der Konsole 124 beziehungsweise des Werkzeugmagazins 32 veranschaulicht. Im Ausführungsbeispiel kann also das Werkzeugmagazin 32 in einem angehobenen Zustand teilweise aus einer oberen Öffnung des Gestells 120 herausfahren.

Der Darstellung gemäß Fig. 6 ist ferner entnehmbar, dass der Drehantrieb 130 mit einem Rad 134 gekoppelt ist. Der Drehantrieb 130 trägt beispielsweise ein mit dem Rad 134 kämmendes Ritzel. Auf diese Weise kann das Werkzeugmagazin 32 um die Magazinachse 132 gedreht werden.

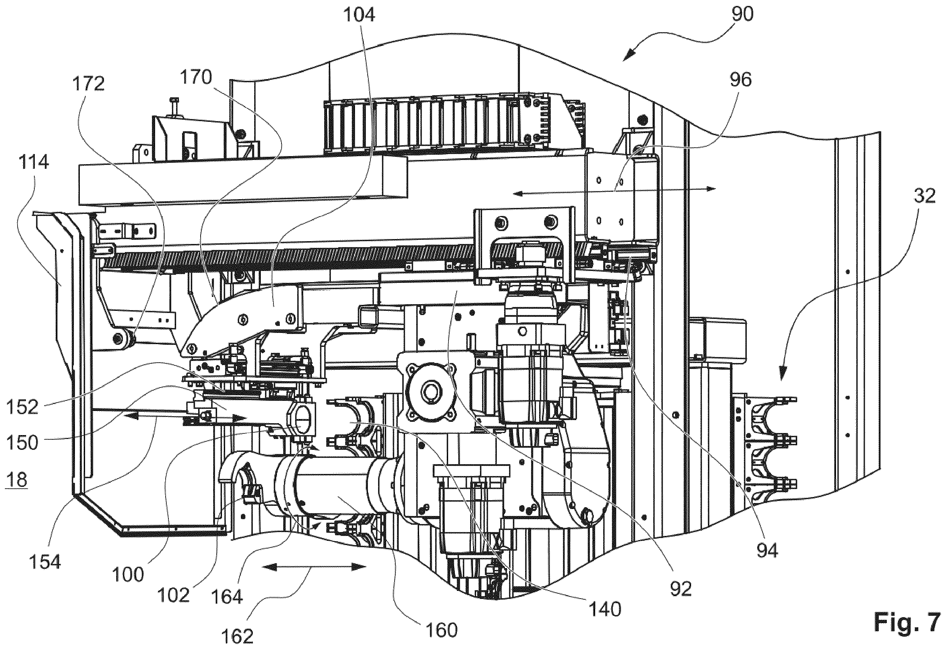

Auf Basis der Darstellung gemäß den Figuren 4-6 veranschaulichen die Figuren 7-9 eine denkbare Detailgestaltung der Transfereinrichtung 90 und insgesamt einen Werkzeugwechsel zwischen dem Magazin 32 und dem Arbeitsraum 18 der Werkzeugmaschine 10, in dem das Werkzeug durch die Transfereinrichtung 90 an einen Werkzeughalter (vergleiche Werkzeughalter 62 gemäß Fig. 4) übergeben wird.

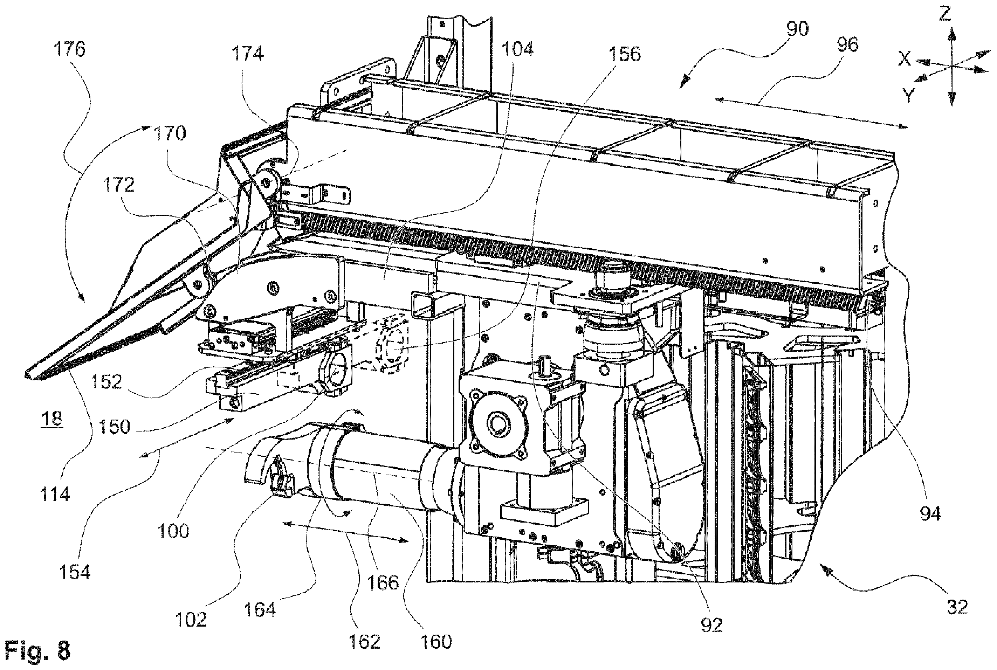

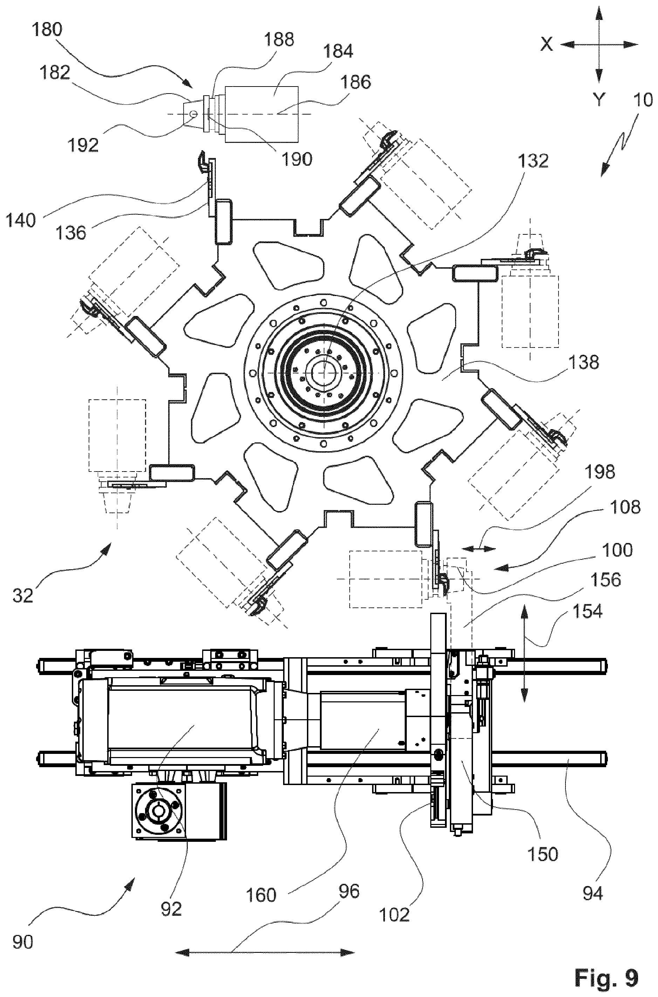

Die Figuren 7 und 8 sind perspektivische Ansichten der Transfereinrichtung 90, vergleiche hierzu die Anordnung der Transfereinrichtung 90 in Bezug auf das Werkzeugmagazin 32 in Fig. 5. Fig. 9 veranschaulicht das Zusammenwirken zwischen Transfereinrichtung 90 und Werkzeugmagazin 32 anhand einer Ansicht von unten her. Vergleiche zur Orientierung auch die Koordinatensysteme X-Y-Z in den Figuren 7-9.

Der Transferschlitten 92 der Transfereinrichtung 90 ist an einer Führung 94 zur Bewegung entlang der Transferachse 96 gelagert. Der Transferschlitten 92 umfasst einen Ausleger 104, der eine Transferaufnahme 100 trägt. Ferner sitzt ein Doppelgreifer 102 am Transferschlitten 92. Die Übergabe von Werkzeugen zwischen der Transfereinrichtung 90 und dem Werkzeugmagazin 32 erfolgt unter Nutzung der Transferaufnahme 100, vergleiche hierzu auch Fig. 9. In Fig. 9 sind Werkzeuge mit 180 bezeichnet.

Die Transferaufnahme 100 ist Bestandteil eines Versatzschiebers 150, der über eine Versatzschiene 152 entlang einer Versatzachse 154 verfahrbar ist. Im Ausführungsbeispiel trägt der Ausleger 104 des Transferschlittens 92 den Versatzschieber 150. Der Versatzschieber 150 mit der Transferaufnahme 100 ist entlang der Versatzachse 154 zwischen einer eingerückten Stellung und einer ausgerückten Stellung (vergleiche die mit 156 bezeichnete gestrichelte Darstellung in Fig. 8) verfahrbar. In der ausgerückten Stellung des Versatzschiebers 150 ist die Transferaufnahme 100 derart in Bezug auf einen an der ersten Übergabeposition 108 bereitgestellten Aufnahmeplatz 140 ausgerichtet, dass ein Werkzeug 180 zwischen dem Aufnahmeplatz 140 und der Transferaufnahme 100 übergeben werden kann, vergleiche Fig. 9. Dies umfasst also beispielsweise eine konzentrische Ausrichtung zwischen der Transferaufnahme 100 und dem Aufnahmeplatz 140.

In den Figuren 7 und 8 des ferner durch einen mit 162 bezeichneten Doppelpfeil eine Hubachse angedeutet, die im Ausführungsbeispiel dem Doppelgreifer 102 zugeordnet ist. Der Doppelgreifer 102 ist über eine Linearführung 160 am Transferschlitten 92 gelagert, so dass eine translatorische Bewegung des Doppelgreifers 102 entlang der Hubachse 162 ermöglicht ist. Auf diese Weise kann ein Abstand zwischen dem Doppelgreifer 102 und der Transferaufnahme 100 des Versatzschiebers 150 entlang der Transferachse 96 variiert werden. Dies ermöglicht eine Übergabe von Werkzeugen 180 zwischen der Transferaufnahme 100 und dem Doppelgreifer 102. Werkzeuge 180 können durch den Doppelgreifer 102 entlang der Hubachse 162 aus der Transferaufnahme 100 entnommen oder in diese eingeführt werden.

Die Figuren 7 und 8 veranschaulichen ferner anhand eines mit 164 bezeichneten gekrümmten Doppelpfeils einen Schwenkantrieb des Doppelgreifers 102. Auf diese Weise kann der Doppelgreifer 102 durch den Schwenkantrieb 164 um dessen Schwenkachse 166 rotiert werden. Dies erlaubt beispielsweise einen unmittelbaren Austausch eines zuvor benutzten Werkzeugs 180 durch ein neues Werkzeug 180 beim Werkzeughalter 62 in der zweiten Übergabeposition 110 (vergleiche Fig. 4).

Der Ausleger 104 des Transferschlittens 92 trägt ferner ein mit 170 bezeichnetes Schiebestück. Das Schiebestück 170 ist dazu ausgebildet, auf die Tür 114 einzuwirken, um die Tür 114 zu öffnen, wenn der Transferschlitten 92 zwischen der ersten Übergabeposition 108 und der zweiten Übergabeposition 110 verfahren wird. Fig. 7 zeigt einen geschlossenen Zustand der Tür 114. Fig. 8 zeigt einen teilweise geöffneten Zustand der Tür 114.

Die Tür 114 ist beispielsweise als um eine Achse 174 schwenkbare Klappe gestaltet. Die Tür 114 trägt im Ausführungsbeispiel eine oder zwei Rollen 172, die durch diesen zugeordnete Schiebestücke 170 an einem dem Arbeitsraum 18 zugewandten Ende des Auslegers 104 kontaktiert werden können. Auf diese Weise kann die Tür 114 verschleißarm durch den Transferschlitten 92 betätigt werden. Wenn der Transferschlitten 92 in den Arbeitsraum 18 eindringt, wird die Tür 114 automatisch geöffnet. In Fig. 8 veranschaulicht ein mit 176 bezeichneter gekrümmter Doppelpfeil die Bewegung der Tür 114 um die Achse 174.

Fig. 9 veranschaulicht einen Wechsel von Werkzeugen 180 zwischen dem Werkzeugmagazin 32 und der Transfereinrichtung 90. Das Werkzeugmagazin 32 umfasst eine Mehrzahl von Segmenten 136, die um die Magazinachse 132 verteilt angeordnet sind. Die Segmente 136 sind im Ausführungsbeispiel an Trägerscheiben 138 befestigt. Die Segmente 136 tragen Aufnahmeplätze 140 für die Werkzeuge 180.

Die Werkzeuge 180 umfassen beispielsweise einen Trägerschaft 182, der primär zur Aufnahme des Werkzeugs 180 an einem Werkzeughalter 62 einer Werkzeugspindel 60 (vergleiche Fig. 4) ausgestaltet ist. Ferner ist ein Bearbeitungsabschnitt 184 vorgesehen, der beispielsweise eine Schneidkontur umfasst. Im Falle eines rotatorisch angetriebenen Werkzeugs 180 ist ferner eine Längsachse 186 vorgesehen. Die Längsachse 186 ist ferner die Mittenachse des Trägerschafts 182.

Das Werkzeug 180 umfasst ferner eine Aufnahmenut 188, die dem Trägerschaft 182 benachbart ist. Die Aufnahmenut 188 kann auch als Greifernut bezeichnet werden. Die Aufnahmenut 188 ist beispielsweise als umlaufende Nut gestaltet. Im Ausführungsbeispiel gemäß Fig. 9 weist das Werkzeug 180 bei der Aufnahmenut 188 ferner zumindest eine Rastausnehmung 190 zur formschlüssigen Lagesicherung auf. In ähnlicher Weise ist auch beim Trägerschaft 182 zumindest eine Rastausnehmung 192 zur formschlüssigen Lagesicherung vorgesehen.

Die Werkzeuge 180 sitzen jeweils mit ihrer Aufnahmenut 188 in den Aufnahmeplätzen 140 des Werkzeugmagazins 32. Daher steht die Aufnahmenut 188 nicht für Handhabungszwecke zur Verfügung. Aus diesem Grund ist die Transferaufnahme 100 des Versatzschiebers 150 köcherartig gestaltet und an den Trägerschaft 182 angepasst. Mit anderen Worten ist die Transferaufnahme 100 beispielsweise konisch gestaltet. Somit kann der Versatzschieber 150 mit der Transferaufnahme 100 unter Nutzung der Bewegung des Transferschlittens 92 entlang der Transferachse 96 über den Trägerschaft 182 eines in der ersten Übergabeposition 108 positionierten Werkzeugs 180 gestülpt oder von diesem gelöst werden. Dies wird in Fig. 9 durch einen mit 198 bezeichneten Einführhub veranschaulicht.

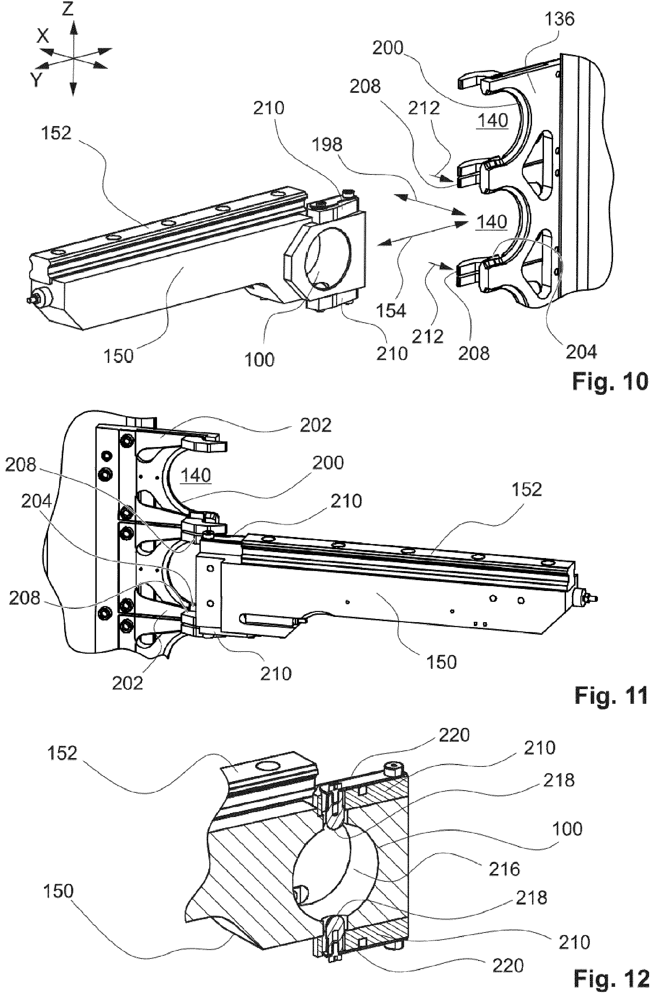

Ein Ablegen oder Entnehmen eines Werkzeugs 180 umfasst also nicht nur eine Bewegung des Versatzschiebers 150 entlang der Versatzachse 154, sondern auch eine Bewegung des Transferschlittens 92 insgesamt entlang der Transferachse 96, vergleiche den Einführhub 198. Werkzeuge 180 können seitlich aus den Aufnahmeplätzen 140 herausgefahren oder in die Aufnahmeplätze 140 eingeführt werden, vergleiche die Bewegung entlang der Versatzachse 154. Eine Kopplung des Trägerschafts 182 mit der Transferaufnahme 100 ist im Ausführungsbeispiel nur über eine hierzu orthogonale Bewegung möglich, vergleiche den Einführhub 198. Die kombinierte Bewegung entlang der Versatzachse 154 sowie durch den Einführhub 198 ist zusätzlich in Fig. 10 durch Doppelpfeile angedeutet.

Die Figuren 10, 11 und 12 detaillieren den Wechsel der Werkzeuge 180 zwischen dem Werkzeugmagazin 32 und der Transferaufnahme 100 des Versatzschiebers 150 sowie den Sitz des Werkzeugs 180 im Werkzeugmagazin 32 und in der Transferaufnahme 100.

Den Figuren 10 und 11 ist aufgrund deren unterschiedlicher Ansichtsorientierung insgesamt entnehmbar, dass die Aufnahmeplätze 140 für die Werkzeuge 180 jeweils in einer Ausnehmung 200 in einem der Segmente 136 ausgebildet sind. Im Ausführungsbeispiel ist den Aufnahmeplätzen 140 jeweils eine Haltefeder 202 zugeordnet, vergleiche auch Fig. 11. Die Haltefedern 202 dienen zur kraftschlüssigen und/oder formschlüssigen Lagesicherung der Werkzeuge 180 im Aufnahmeplatz 140. Die Haltefedern 202 tragen jeweils zumindest ein Rastelement 204, das beispielsweise dazu ausgebildet ist, die Rastausnehmung 190 in der Aufnahmenut 188 des Werkzeugs 180 zu kontaktieren, vergleiche hierzu auch Fig. 9. Wenn ein Rastelement 204 in eine Rastausnehmung 190 einer Aufnahmenut 188 einrückt, ist das Werkzeug 180 formschlüssig im Aufnahmeplatz 140 gesichert. Im Ausführungsbeispiel kann das Werkzeug 180 dann nicht mehr seitlich (vergleiche die Versatzachse 154) entnommen werden.

Daher ist es erforderlich, die Haltefeder 202 mit dem zumindest einen Rastelement 204 zu verlagern, um das Werkzeug 180 im Aufnahmeplatz 140 absetzen zu können und/oder um das Werkzeug 180 aus dem Aufnahmeplatz 140 entnehmen zu können. Zu diesem Zweck tragen die Haltefedern 202 sogenannte Kontaktstücke 208, die dazu ausgebildet sind, von Verdrängungsstücken 210 kontaktiert zu werden, die am Versatzschieber 150 angeordnet sind. Die Verdrängungsstücke 210 und die Kontaktstücke 208 weisen geneigte Flanken auf, so dass auch bei einer Bewegung des Versatzschiebers 150 entlang der Versatzachse 154 eine gewünschte Auslenkung der Haltefeder 202 mit dem Rastelement 204 quer oder schräg zur Versatzachse 154 ermöglicht ist. Dies kann genutzt werden, um ein in der Transferaufnahme 100 angeordnetes Werkzeug 180 in einen Aufnahmeplatz 140 einzuführen.

Zur Entnahme eines Werkzeugs 180 aus einem Aufnahmeplatz 140 erfolgt zunächst eine Bewegung des Versatzschiebers 150 mit der Transferaufnahme 100 entlang der Transferachse 96 (vergleiche den Einführhub 198). Auch durch diese Bewegung können die Verdrängungsstücke 210 die Kontaktstücke 208 kontaktieren und infolgedessen die Haltefeder 202 mit dem zumindest einen Rastelement 204 auslenken. Sodann ist das Werkzeug 180 entriegelt, das Werkzeug 180 kann seitlich (vergleiche Versatzachse 154) aus dem Aufnahmeplatz 140 entnommen werden. In Fig. 10 veranschaulichen mit 212 bezeichnete Pfeile die Kraft auf die Kontaktstücke 208, die durch die Verdrängungsstücke 210 aufgebracht wird, um die Rastelemente 204 der Haltefedern 202 in der gewünschten Weise zu verlagern.

Fig. 12 veranschaulicht eine geschnittene Teildarstellung des Versatzschiebers 150. Gezeigt ist insbesondere die Transferaufnahme 100. Die Transferaufnahme 100 ist etwa köcherartig gestaltet. Die Transferaufnahme 100 stellt einen Aufnahmesitz 216 für einen Trägerschaft 182 eines Werkzeugs 180 bereit. Zur Lagesicherung ist der Transferaufnahme 100 zumindest ein Rastelement 218 zugeordnet, das beispielsweise als Kugel oder Kugelabschnitt gestaltet ist. Das zumindest eine Rastelement 218 kann beispielsweise in eine Rastausnehmung 192 am Trägerschaft 182 des Werkzeugs 180 eingreifen, vergleiche auch Fig. 9. Im Ausführungsbeispiel gemäß Fig. 12 sind zwei einander gegenüberliegende Rastelemente 218 vorgesehen, die jeweils an einer auslenkbaren Feder 220 angeordnet sind. Auf diese Weise ergibt sich eine Haltekraft, die ein aufgenommenes Werkzeug 180 im Aufnahmesitz 216 der Transferaufnahme 100 formschlüssig und kraftschlüssig sichert.

Zur Entnahme eines Werkzeugs 180 muss diese Haltekraft überwunden werden. Dies kann dadurch bewerkstelligt werden, dass der Doppelgreifer 102 das Werkzeug 180 an seiner Aufnahmenut 188 greift und aufgrund einer Bewegung des Doppelgreifers 102 entlang der Hubachse 162 (vergleiche Fig. 7 und Fig. 8) aus der Transferaufnahme 100 herauszieht.

Im Ausführungsbeispiel gemäß Fig. 12 ist die Feder 220 für das Rastelement 218 jeweils an einem der Verdrängungsstücke 210 angeordnet. Das Rastelement 218 sitzt in einer Ausnehmung im Verdrängungsstück 210. Das Rastelement 218 ragt in den Aufnahmesitz 216 der Transferaufnahme 100 hinein. Durch Deformation der Feder 220 kann das Rastelement 218 ausrücken, so dass der Trägerschaft 182 eines Werkzeugs 180 passieren kann.

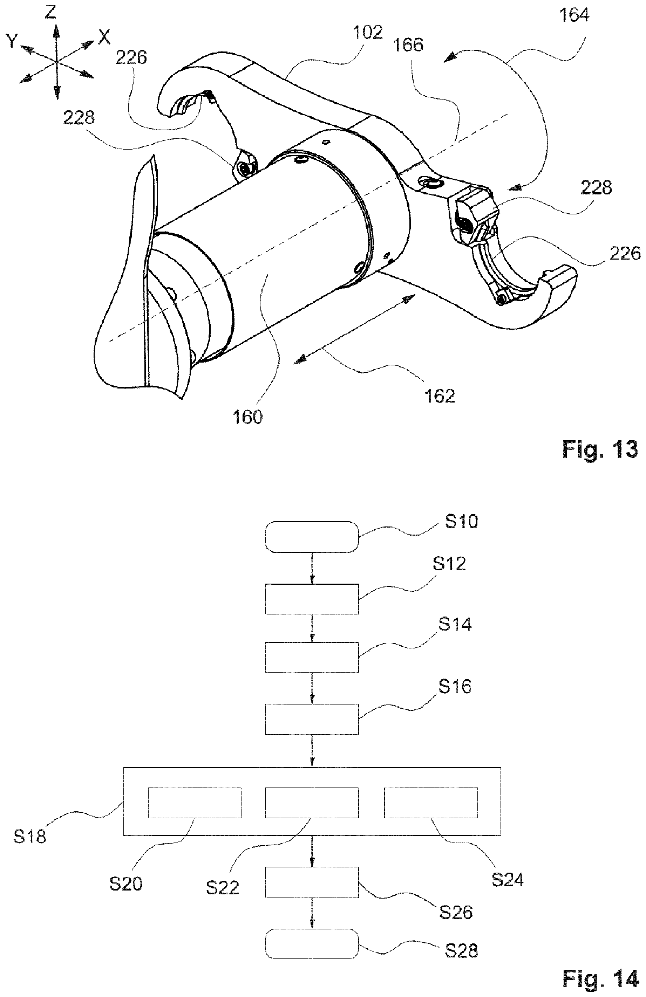

Ergänzend zu den vorherigen Detailgestaltungen veranschaulicht Fig. 13 eine denkbare Ausgestaltung des Doppelgreifers 102. Der Doppelgreifer 102 ist durch einen Schwenkantrieb (vergleiche den gekrümmten Doppelpfeil 164) um eine Schwenkachse 166 verschwenkbar. Auf diese Weise kann etwa durch eine Verschwenkung um 180° ein Werkzeug 180 entnommen und durch ein anderes Werkzeug 180 ersetzt werden. Dies umfasst jedoch üblicherweise auch eine Bewegung entlang der parallel zur Schwenkachse 166 orientierten Hubachse 162.

Der Doppelgreifer 102 stellt zwei Sitze 126 für Werkzeuge 180 bereit. Im Ausführungsbeispiel gemäß Fig. 13 ist zusätzlich jeweils ein Rastelement 228 vorgesehen, das den Sitz des Werkzeugs 180 am Doppelgreifer 102 formschlüssig sichert. Die Rastelemente 228 können einerseits als federnde Rastelemente gestaltet sein. Demgemäß kann der Sitz der Werkzeuge 180 am Doppelgreifer 102 durch eine bestimmte Kraft gelöst werden. Es ist jedoch auch vorstellbar, die Rastelemente 228 gezielt anzusteuern, um die formschlüssige Lage der Werkzeuge 180 am Doppelgreifer 102 bedarfsweise freizugeben oder zu sichern.

Fig. 13 veranschaulicht ferner die Linearführung 160, die etwa als Arm für den Doppelgreifer 102 gestaltet ist. Im Ausführungsbeispiel ist der Doppelgreifer 102 entlang der Linearführung 160 beweglich, vergleiche die durch einen Doppelpfeil 162 gekennzeichnete Hubachse. Damit kann der Doppelgreifer 102 relativ zur Transferaufnahme 100 entlang der Transferachse 96 bewegt werden, vergleiche auch Fig. 9. Dies erlaubt eine Entnahme von Werkzeugen 180 aus der Transferaufnahme 100 oder eine Ablage von Werkzeugen 180 in der Transferaufnahme 100.

Fig. 14 veranschaulicht anhand eines schematischen Blockdiagramm eine beispielhafte Ausgestaltung eines Verfahrens zum Wechseln eines Werkzeugs bei einer Werkzeugmaschine. Das Verfahren startet im Ausführungsbeispiel bei einem Schritt S10.

Ein Schritt S12 betrifft die Bereitstellung eines Werkzeugmagazins, insbesondere eines Werkzeugmagazins, das um eine Drehachse rotierbar und entlang einer linearen Achse durch einen Linearantrieb translatorisch verfahrbar ist, insbesondere in einer vertikalen Richtung. In einer beispielhaften Ausgestaltung beansprucht der Linearantrieb einen Bauraum im Zentrum des Werkzeugmagazins. Das Werkzeugmagazin ist beispielsweise säulenartig oder turmartig gestaltet. Da die lineare Achse zumindest teilweise in das Werkzeugmagazin integriert ist, beansprucht das Werkzeugmagazin insgesamt eine geringe Grundfläche, obwohl das Werkzeugmagazin selbst in mehreren Freiheitsgraden bewegt werden kann. Ein Vorteil dieser Gestaltung ist, dass beliebige Aufnahmeplätze für Werkzeuge in einer ersten Übergabeposition bereitgestellt werden können. Dies verringert den Bedarf an zusätzlicher Handhabungstechnik.

Ein Schritt S14 betrifft die Bereitstellung einer Transfereinrichtung, insbesondere einer Transfereinrichtung, die dazu ausgebildet ist, in der ersten Übergabeposition Werkzeuge direkt mit dem Werkzeugmagazin auszutauschen, sowie in einer zweiten Übergabeposition Werkzeuge direkt mit einem Werkzeughalter der Werkzeugmaschine auszutauschen. Beispielhaft umfasst die Transfereinrichtung einen entlang einer Transferachse verfahrbaren Transferschlitten, der einen entlang einer Versatzachse verfahrbaren Versatzschieber sowie einen um eine Schwenkachse schwenkbaren Doppelgreifer umfasst.

Ein Schritt S16 bezieht sich auf eine Bewegung des Werkzeugmagazins, um ein Werkzeug oder einen leeren Aufnahmeplatz in der ersten Übergabeposition bereitzustellen. Zu diesem Zweck kann das Werkzeugmagazin durch den Drehantrieb rotiert und durch den Linearantrieb entlang der linearen Achse verfahren werden. Auf diese Weise können am Umfang des Werkzeugmagazins verteilt angeordnete Aufnahmeplätze bereitgestellt werden. Das Werkzeugmagazin wird nicht nur rotiert, sondern auch insgesamt linear verfahren, um beliebige Aufnahmeplätze ansteuern zu können.

Ein Schritt S18 bezieht sich auf eine Bewegung der Transfereinrichtung, die auch eine koordinierte Bewegung von Komponenten der Transfereinrichtung umfasst. Der Schritt S18 umfasst im Ausführungsbeispiel Teilschritte S20, S22, S24, die zumindest teilweise parallel ausgeführt werden können.

Der Teilschritt S20 bezieht sich auf eine Bewegung des Transferschlittens entlang der Transferachse. Diese Bewegung kann auch als globale Bewegung des Transferschlittens zwischen der ersten Übergabeposition und der zweiten Übergabeposition bezeichnet werden. Die Bewegung des Transferschlittens entlang der Transferachse kann auch zur Betätigung einer Tür zum Arbeitsraum der Werkzeugmaschine genutzt werden. Die Transferachse ist gegenüber der linearen Achse des Werkzeugmagazins geneigt, insbesondere orthogonal hierzu orientiert.

Der Teilschritt S22 bezieht sich auf eine Bewegung eines Versatzschiebers entlang einer Versatzachse. Der Versatzschieber umfasst eine Transferaufnahme, die beispielsweise köcherartig gestaltet und an einen Trägerschaft des Werkzeugs angepasst ist. Die Versatzachse ist gegenüber der Transferachse geneigt, insbesondere orthogonal zur Transferachse orientiert. Auf diese Weise kann der Versatzschieber seitlich ausgelenkt werden, um zur Übernahme oder Übergabe eines Werkzeugs in die gewünschte Ausrichtung mit dem bereitgestellten Aufnahmeplatz verfahren zu werden. Durch Koordination mit dem Teilschritt S20 kann ein Einführhub bereitgestellt werden, so dass der Trägerschaft des Werkzeugs in die Transferaufnahme Einrücken oder aus dieser herausfahren kann.

Der Teilschritt S24 umfasst eine Bewegung des Doppelgreifers. Dies umfasst beispielhaft eine Schwenkbewegung um eine parallel zur Transferachse orientierte Schwenkachse. Der Doppelgreifer ist dazu ausgebildet, Werkzeuge von der Transferaufnahme des Versatzschiebers zu entnehmen oder in die Transferaufnahme einzuführen. Zu diesem Zweck ist beispielsweise eine zusätzliche Hubachse vorgesehen, die den Doppelschieber relativ zur Transferaufnahme entlang der Transferachse bewegt. Ferner kann der Doppelgreifer Werkzeuge in einer geeigneten Orientierung für einen Austausch mit einem Werkzeughalter der Werkzeugmaschine in der zweiten Übergabeposition bereitstellen.

In einem weiteren Schritt S26 erfolgt in der zweiten Übergabeposition ein Werkzeugwechsel zwischen der Transfereinrichtung und dem Werkzeughalter durch den Doppelgreifer. Auf diese Weise kann beispielsweise ein Werkzeug von einem Werkzeughalter der Werkzeugmaschine entnommen und gegen ein neues Werkzeug getauscht werden.

Das Verfahren endet im Ausführungsbeispiel bei einem Schritt S28. Es versteht sich, dass das Verfahren auch zumindest abschnittsweise auf das Auswechseln eines Werkzeugs aus einem Werkzeughalter im Arbeitsraum einer Werkzeugmaschine anwendbar ist. Demgemäß können einige der Verfahrensschritte rückwärts durchlaufen werden, um das Werkzeug im Werkzeugmagazin abzulegen.

## Patentansprüche

1. Werkzeugwechselvorrichtung (30) für eine Werkzeugmaschine (10), die Folgendes aufweist:
- ein säulenartig gestaltetes Werkzeugmagazin (32), das durch einen Drehantrieb (130) um eine vertikal orientierte Magazinachse (132) rotierbar ist und eine Mehrzahl von Aufnahmeplätzen (140) für Werkzeuge (180) aufweist, von denen zumindest einige relativ zueinander entlang der Magazinachse (132) und zumindest einige relativ zueinander um die Magazinachse (132) versetzt angeordnet sind,
- eine einen Transferschlitten (92) aufweisende Transfereinrichtung (90), die zwischen einer ersten Übergabeposition (108) in Bezug auf das Werkzeugmagazin (32) und einer zweiten Übergabeposition (110) verfahrbar ist, um Werkzeuge (180) zwischen dem Werkzeugmagazin (32) und einem Werkzeughalter (62) der Werkzeugmaschine (10) zu transferieren, und
- einen als Hubantrieb gestalteten Linearantrieb (128) für das Werkzeugmagazin (32), der das Werkzeugmagazin (32) entlang der Magazinachse (132) relativ zur Transfereinrichtung (90) vertikal verfährt, um gemeinsam mit dem Drehantrieb (130) einen gewählten Aufnahmeplatz (140) in der ersten Übergabeposition (108) bereitzustellen,
**dadurch gekennzeichnet, dass** die Aufnahmeplätze (140) dazu ausgebildet sind, Werkzeuge (180) an einer Aufnahmenut (188) der Werkzeuge (180) und in einer horizontalen Orientierung der Längsachse (186) der Werkzeuge (180), orthogonal zur Magazinachse (132), zu halten, und
dass die Aufnahmeplätze (140) seitlich nach außen geöffnet sind, so dass die Werkzeuge (180) seitlich nach außen, orthogonal zur Magazinachse (132), entnehmbar sind.

2. Werkzeugwechselvorrichtung (30) nach Anspruch 1, **dadurch gekennzeichnet, dass** die Bewegung der Transfereinrichtung (90) zwischen der ersten Übergabeposition (108) und der zweiten Übergabeposition (110) entlang einer Transferachse (96) erfolgt, die insbesondere senkrecht zur Magazinachse (132) orientiert ist und eine gestellfeste Führung (94) aufweist, entlang der der Transferschlitten (92) der Transfereinrichtung (90) verfahrbar ist.

3. Werkzeugwechselvorrichtung (30) nach Anspruch 1 oder 2, **dadurch gekennzeichnet, dass** ein direkter Wechsel der Werkzeuge (180) zwischen der Transfereinrichtung (90) und den Aufnahmeplätzen (140) des Werkzeugmagazins (32) ermöglicht ist.

4. Werkzeugwechselvorrichtung (30) nach einem der Ansprüche 1-3, **dadurch gekennzeichnet, dass** das Werkzeugmagazin (32) zwei oder mehr um die Magazinachse (132) verteilte Segmente (136) mit in Reihe entlang der Magazinachse (132) zueinander versetzten Aufnahmeplätzen (140) umfasst.

5. Werkzeugwechselvorrichtung (30) nach einem der Ansprüche 1-4, **dadurch gekennzeichnet, dass** die Aufnahmeplätze (140) nach außen geöffnete Ausnehmungen (200) umfassen, die an die Aufnahmenuten (188) der Werkzeuge (180) angepasst sind.

6. Werkzeugwechselvorrichtung (30) nach einem der Ansprüche 1-5, **dadurch gekennzeichnet, dass** die Transfereinrichtung (90) eine Transferaufnahme (100) aufweist, die insbesondere dazu ausgebildet ist, einen Trägerschaft (182) eines Werkzeugs (180) zu umgreifen.

7. Werkzeugwechselvorrichtung (30) nach Anspruch 6, **dadurch gekennzeichnet, dass** am Transferschlitten (92) der Transfereinrichtung (90) eine Versatzachse (154) vorgesehen ist, die die Transferaufnahme (100) zwischen einer eingerückten Stellung und einer ausgerückten Stellung verfährt, und/oder dass die Transferaufnahme (100) federnde Rastelemente (218) aufweist, um ein aufgenommenes Werkzeug (180) zu sichern.

8. Werkzeugwechselvorrichtung (30) nach Anspruch 6 oder 7, **dadurch gekennzeichnet, dass** zumindest einige der Aufnahmeplätze (140) des Werkzeugmagazins (32) mit einer Haltefeder (202) gekoppelt sind, die ein aufgenommenes Werkzeug (180) mit einem Rastelement (204) im Aufnahmeplatz (140) sichert, und dass die Transfereinrichtung (90) einen Versatzschieber (152) aufweist, der die Transferaufnahme (100) trägt und dazu ausgebildet ist, die Haltefeder (202) auszulenken, um ein Werkzeug (180) im Aufnahmeplatz (140) abzusetzen oder vom Aufnahmeplatz (140) zu lösen.

9. Werkzeugwechselvorrichtung (30) nach einem der Ansprüche 6-8, **dadurch gekennzeichnet, dass** die Transfereinrichtung (90) einen am Transferschlitten (92) angeordneten Doppelgreifer (102) aufweist, der insbesondere um eine Schwenkachse (166) schwenkbar ist.

10. Werkzeugwechselvorrichtung (30) nach Anspruch 9, **dadurch gekennzeichnet, dass** am Transferschlitten (92) ferner eine Hubachse (162) vorgesehen ist, die zumindest dem Doppelgreifer (102) oder der Transferaufnahme (100) zugeordnet ist, um eine Übergabe von Werkzeugen (180) zwischen dem Doppelgreifer (102) und der Transferaufnahme (100) zu ermöglichen, und dass die Hubachse insbesondere dem Doppelgreifer (102) zugeordnet ist und mit der Schwenkachse (166) des Doppelgreifers (102) zusammenfällt.

11. Werkzeugwechselvorrichtung (30) nach einem der Ansprüche 1-10, **dadurch gekennzeichnet, dass** der Transferschlitten (92) bei der Verfahrbewegung zwischen der ersten Übergabeposition (108) und der zweiten Übergabeposition (110) eine einen Arbeitsraum (18) schließende Tür (114) betätigt, und dass der Transferschlitten (92) insbesondere zumindest zeitweise in den Arbeitsraum (18) hineinragt.

12. Werkzeugwechselvorrichtung (30) nach einem der Ansprüche 1-11, **dadurch gekennzeichnet, dass** dem Werkzeugmagazin (32) ein insbesondere gestellfestes Lesegerät (142) zur Werkzeugidentifikation zugeordnet ist, wobei das Werkzeugmagazin (32) entlang der Magazinachse (132) verfahren sowie um die Magazinachse (132) rotiert wird, um einen gewählten Aufnahmeplatz (140) in einen Erfassungsbereich des Lesegerätes (142) zu bringen, und/oder dass das Werkzeugmagazin (32) eine Zugangstür (34) aufweist, durch die eine Mehrzahl von Aufnahmeplätzen (140), insbesondere entlang der Magazinachse (132) zueinander versetzten Aufnahmeplätzen (140), von außen zugänglich ist.

13. Werkzeugmaschine (10) mit einem Gestell (12, 120), zumindest einem Werkstückhalter (78) zur Aufnahme eines Werkstücks, und zumindest einem Werkzeughalter (62) zur Aufnahme eines Werkzeugs (180), **gekennzeichnet durch** zumindest eine Werkzeugwechselvorrichtung (30) nach einem der Ansprüche 1-12, wobei der Werkzeughalter (62) für einen Werkzeugwechsel relativ zum Gestell (12, 120) in die zweite Übergabeposition (110) verfahrbar ist, und wobei der Werkzeughalter (62) insbesondere zur Aufnahme eines Trägerschafts (182) des Werkzeugs (180) ausgebildet und Bestandteil einer schwenkbaren Werkzeugspindel (60) ist, um den Werkzeughalter (62) in der zweiten Übergabeposition (110) in eine Übergabeorientierung zum Werkzeugwechsel zu bringen.

14. Werkzeugmaschine (10) nach Anspruch 13, **dadurch gekennzeichnet, dass** der Werkstückhalter (78) einer Werkstückspindel (80) zugeordnet ist, die zur Rotation von Werkstücken um eine insbesondere zur Transferachse (96) parallel orientierten Achse (86) ausgebildet ist, dass der Werkzeughalter (62) in zumindest drei Achsen relativ zum Werkstückhalter (78) verfahrbar ist, dass dem Werkstückhalter (78) ein Gegenhalter in Form eines sekundären Werkstückhalters (82) gegenüberliegt, dass der Werkstückhalter (78) und der sekundäre Werkstückhalter (82) konzentrisch zueinander orientiert sind, dass der Werkzeughalter (62) und der sekundäre Werkstückhalter (82) zumindest in einer Basisorientierung vom Werkzeugmagazin (32) beabstandet sind, und dass der Werkstückhalter (78) dem Werkzeugmagazin (32) benachbart ist.

15. Verfahren zum Wechseln eines Werkzeugs (180), insbesondere unter Nutzung einer Werkzeugwechselvorrichtung (30) nach einem der Ansprüche 1-12, mit den folgenden Schritten:
- Bereitstellung eines säulenartig gestalteten Werkzeugmagazins (32), das um eine vertikal orientierte Magazinachse (132) rotierbar und entlang der Magazinachse (132) vertikal verfahrbar ist, mit einer Mehrzahl von Aufnahmeplätzen (140) für Werkzeuge (180), von denen zumindest einige relativ zueinander entlang der Magazinachse (132) und zumindest einige relativ zueinander um die Magazinachse (132) versetzt angeordnet sind,
wobei die Aufnahmeplätze (140) dazu ausgebildet sind, Werkzeuge (180) an einer Aufnahmenut (188) der Werkzeuge (180) und in einer horizontalen Orientierung der Längsachse (186) der Werkzeuge (180), orthogonal zur Magazinachse (132), zu halten, und
wobei die Aufnahmeplätze (140) seitlich nach außen geöffnet sind, so dass die Werkzeuge (180) seitlich nach außen, orthogonal zur Magazinachse (132), entnehmbar sind,
- Bereitstellung einer einen Transferschlitten (92) aufweisenden Transfereinrichtung (90), die zwischen einer ersten Übergabeposition (108) in Bezug auf das Werkzeugmagazin (32) und einer zweiten Übergabeposition (110) verfahrbar ist, um Werkzeuge (180) zwischen dem Werkzeugmagazin (32) und einem Werkzeughalter (62) der Werkzeugmaschine (10) zu transferieren, und die insbesondere einen Doppelgreifer (102) für einen Werkzeugwechsel mit dem Werkzeughalter (62) sowie einen Versatzschieber (152) mit einer Transferaufnahme (100) für einen Werkzeugwechsel mit dem Werkzeugmagazin (32) umfasst,
- Bewegen des Werkzeugmagazins (32), um einen Aufnahmeplatz (140) für ein Werkzeug (180) in der ersten Übergabeposition (108) bereitzustellen, und
- Transferieren eines Werkzeugs (180) zwischen der ersten Übergabeposition (108) und der zweiten Übergabeposition (110),
wobei in der ersten Übergabeposition (108) die Übergabe direkt zwischen dem Werkzeugmagazin (32) und der Transfereinrichtung (92) erfolgt, insbesondere unter Verwendung des Versatzschiebers (152), und
wobei in der zweiten Übergabeposition (110) die Übergabe direkt zwischen der Transfereinrichtung (90) und dem Werkzeughalter (62) erfolgt, insbesondere unter Verwendung des Doppelgreifers (102).

## Claims

1. A tool changing device (30) for a machine tool (10), comprising:
- a columnar tool magazine (32), which is rotatable about a vertically oriented magazine axis (132) by a rotary drive (130) and has a plurality of holding locations (140) for tools (180), at least some of which are arranged offset relative to one another along the magazine axis (132), and at least some of which are arranged offset relative to one another about the magazine axis (132),
- a transfer device (90), which comprises a transfer carriage (92) and is movable between a first transfer position (108) in relation to the tool magazine (32) and a second transfer position (110) for transferring tools (180) between the tool magazine (32) and a tool holder (62) of the machine tool (10), and
- a linear drive (128), configured as a lifting drive, for the tool magazine (32), which vertically moves the tool magazine (32) along the magazine axis (132) relative to the transfer device (90) to provide, together with the rotary drive (130), a selected holding location (140) in the first transfer position (108),
**characterized in that** the holding locations (140) are configured to hold tools (180) at a receiving groove (188) of the tools (180) and in a horizontal orientation of the longitudinal axis (186) of the tools (180), orthogonally to the magazine axis (132), and
**in that** the holding locations (140) are open laterally outward, such that the tools (180) are removable laterally outward, orthogonally to the magazine axis (132).

2. Tool changing device (30) according to claim 1, **characterized in that** the movement of the transfer device (90) between the first transfer position (108) and the second transfer position (110) takes place along a transfer axis (96), which is in particular oriented perpendicular to the magazine axis (132) and comprises a frame-fixed guide (94), along which the transfer carriage (92) of the transfer device (90) is movable.

3. Tool changing device (30) according to claim 1 or 2, **characterized in that** a direct transfer of the tools (180) between the transfer device (90) and the holding locations (140) of the tool magazine (32) is enabled.

4. Tool changing device (30) according to any one of claims 1-3, **characterized in that** the tool magazine (32) comprises two or more segments (136) that are distributed about the magazine axis (132), the segments (136) having holding locations (140) that are arranged in series and offset from one another along the magazine axis (132).

5. Tool changing device (30) according to any one of claims 1-4, **characterized in that** the holding locations (140) comprise outwardly open recesses (200) that are adapted to the receiving grooves (188) of the tools (180).

6. Tool changing device (30) according to any one of claims 1-5, **characterized in that** the transfer device (90) comprises a transfer receptacle (100), which is in particular configured to engage around a support shaft (182) of a tool (180).

7. Tool changing device (30) according to claim 6, **characterized in that** an offset axis (154) is provided at the transfer carriage (92) of the transfer device (90), which moves the transfer receptacle (100) between a retracted position and an extended position, and/or **in that** the transfer receptacle (100) comprises resilient locking elements (218) to secure a received tool (180).

8. Tool changing device (30) according to claim 6 or 7, **characterized in that** at least some of the holding locations (140) of the tool magazine (32) are coupled to a retaining spring (202) that secures a received tool (180) with a locking element (204) in the holding location (140), and **in that** the transfer device (90) comprises an offset slide (152), which supports the transfer receptacle (100), and which is arranged to deflect the retaining spring (202) in order to deposit a tool (180) in the holding location (140) or to release it from the holding location (140).

9. Tool changing device (30) according to any one of claims 6-8, **characterized in that** the transfer device (90) comprises a double gripper (102) that is arranged at the transfer carriage (92), and that is in particular pivotable about a pivot axis (166).

10. Tool changing device (30) according to claim 9, **characterized in that** at the transfer carriage (92) there is further provided a stroke axis (162), which is associated with at least one of the double gripper (102) and the transfer receptacle (100), in order to enable a transfer of tools (180) between the double gripper (102) and the transfer receptacle (100), and that the stroke axis is in particular associated with the double gripper (102) and coincides with the pivot axis (166) of the double gripper (102).

11. Tool changing device (30) according to any one of claims 1-10, **characterized in that** during the travel movement between the first transfer position (108) and the second transfer position (110), the transfer carriage (92) actuates a door (114) that closes the working space (18), and **in that** the transfer carriage (92) in particular projects at least temporarily into the working space (18).

12. Tool changing device (30) according to any one of claims 1-11, **characterized in that** a scanner (142), in particular a frame-fixed scanner (142), is assigned to the tool magazine (32) for tool identification, wherein the tool magazine (32) is moved along the magazine axis (132) and rotated about the magazine axis (132) in order to bring a selected holding location (140) into a detection range of the scanner (142), and/or that the tool magazine (32) has an access door (34), through which a plurality of holding locations (140), in particular holding locations (140) that are offset relative to one another along the magazine axis (132), are accessible from the outside.

13. A machine tool (10) having a frame (12, 120), at least one workpiece holder (78) for receiving a workpiece, and at least one tool holder (62) for receiving a tool (180), **characterized by** at least one tool changing device (30) according to any one of claims 1-12, wherein the tool holder (62) is movable relative to the frame (12, 120) to the second transfer position (110) for a tool change, and wherein the tool holder (62) is in particular configured to receive a support shaft (182) of the tool (180) and is part of a pivotable tool spindle (60) to bring the tool holder (62) in the second transfer position (110) into a transfer orientation for a tool change.

14. Machine tool (10) according to claim 13, **characterized in that** the workpiece holder (78) is associated with a workpiece spindle (80), which is arranged to rotate workpieces about an axis (86) that is in particular oriented parallel to the transfer axis (96), **in that** the tool holder (62) is movable in at least three axes relative to the workpiece holder (78), **in that** a counterholder in the form of a secondary workpiece holder (82) is located opposite the workpiece holder (78), **in that** the workpiece holder (78) and the secondary workpiece holder (82) are oriented concentrically with respect to each other, **in that** the tool holder (62) and the secondary workpiece holder (82) are spaced away from the tool magazine (32) at least in a base orientation, and **in that** the workpiece holder (78) is adjacent to the tool magazine (32).

15. A method for changing a tool (180), in particular using a tool changing device (30) according to any one of claims 1-12, comprising the following steps:
- providing a columnar tool magazine (32) that is rotatable about a vertically oriented magazine axis (132) and vertically movable along the magazine axis (132), the tool magazine (32) having a plurality of holding locations (140) for tools (180), at least some of which are arranged offset relative to one another along the magazine axis (132), and at least some of which are arranged offset relative to one another about the magazine axis (132),
wherein the holding locations (140) are configured to hold tools (180) at a receiving groove (188) of the tools (180) and in a horizontal orientation of the longitudinal axis (186) of the tools (180), orthogonally to the magazine axis (132), and
wherein the holding locations (140) are open laterally outward, such that the tools (180) are removable laterally outward, orthogonally to the magazine axis (132),
- providing a transfer device (90) comprising a transfer carriage (92), which is movable between a first transfer position (108) in relation to the tool magazine (32) and a second transfer position (110), in order to transfer tools (180) between the tool magazine (32) and a tool holder (62) of the machine tool (10), and which in particular comprises a double gripper (102) for a tool change with the tool holder (62) and an offset slide (152) having a transfer receptacle (100) for a tool change with the tool magazine (32),
- moving the tool magazine (32) to provide a holding location (140) for a tool (180) in the first transfer position (108), and
- transferring a tool (180) between the first transfer position (108) and the second transfer position (110),
wherein in the first transfer position (108), the transfer takes place directly between the tool magazine (32) and the transfer device (92), in particular using the offset slide (152), and
wherein in the second transfer position (110), the transfer takes place directly between the transfer device (90) and the tool holder (62), in particular using the double gripper (102).

## Revendications

1. Dispositif de changement d'outil (30) pour une machine-outil (10), présentant les éléments suivants :
- un magasin d'outils (32) conçu comme une colonne, lequel peut être mis en rotation autour d'un axe de magasin (132) orienté verticalement par un entraînement rotatif (130) et présente une pluralité d'emplacements de réception (140) pour des outils (180), dont au moins certains sont disposés de manière à être décalés les uns par rapport aux autres le long de l'axe de magasin (132) et au moins certains sont disposés de manière à être décalés les uns par rapport aux autres autour de l'axe de magasin (132),
- un équipement de transfert (90) présentant un chariot de transfert (92), lequel équipement de transfert peut être déplacé entre une première position de remise (108) par rapport au magasin d'outils (32) et une seconde position de remise (110) afin de transférer des outils (180) entre le magasin d'outils (32) et un porte-outil (62) de la machine-outil (10), et
- un entraînement linéaire (128) conçu comme un entraînement de levage pour le magasin d'outils (32), lequel entraînement linéaire déplace verticalement le magasin d'outils (32) le long de l'axe de magasin (132) par rapport à l'équipement de transfert (90) afin de mettre en place, conjointement avec l'entraînement rotatif (130), un emplacement de réception (140) sélectionné dans la première position de remise (108),
**caractérisé en ce que** les emplacements de réception (140) sont réalisés pour maintenir des outils (180) au niveau d'une rainure de réception (188) des outils (180) et dans une orientation horizontale de l'axe longitudinal (186) des outils (180), orthogonalement à l'axe de magasin (132), et
**en ce que** les emplacements de réception (140) sont ouverts latéralement vers l'extérieur de sorte que les outils (180) peuvent être retirés latéralement vers l'extérieur, orthogonalement à l'axe de magasin (132).

2. Dispositif de changement d'outil (30) selon la revendication 1, **caractérisé en ce que** le mouvement de l'équipement de transfert (90) entre la première position de remise (108) et la seconde position de remise (110) est effectué le long d'un axe de transfert (96) qui est en particulier orienté perpendiculairement à l'axe de magasin (132) et présente un guide (94) solidaire au châssis le long duquel le chariot de transfert (92) de l'équipement de transfert (90) peut être déplacé.

3. Dispositif de changement d'outil (30) selon la revendication 1 ou 2, **caractérisé en ce qu'**un changement direct des outils (180) entre l'équipement de transfert (90) et les emplacements de réception (140) du magasin d'outils (32) est permis.

4. Dispositif de changement d'outil (30) selon l'une des revendications 1 à 3, **caractérisé en ce que** le magasin d'outils (32) comprend deux segments (136) ou plus répartis autour de l'axe de magasin (132) et comportant des emplacements de réception (140) décalés les uns par rapport aux autres en série le long de l'axe de magasin (132).

5. Dispositif de changement d'outil (30) selon l'une des revendications 1 à 4, **caractérisé en ce que** les emplacements de réception (140) comprennent des évidements (200) ouverts vers l'extérieur et adaptés aux rainures de réception (188) des outils (180).

6. Dispositif de changement d'outil (30) selon l'une des revendications 1 à 5, **caractérisé en ce que** l'équipement de transfert (90) présente un réceptacle de transfert (100) qui est en particulier réalisé pour enserrer une tige de support (182) d'un outil (180).

7. Dispositif de changement d'outil (30) selon la revendication 6, **caractérisé en ce qu'**un axe de décalage (154) est prévu sur le chariot de transfert (92) de l'équipement de transfert (90), lequel axe de décalage déplace le réceptacle de transfert (100) entre une station rentrée et une station sortie, et/ou **en ce que** le réceptacle de transfert (100) présente des éléments d'encliquetage (218) à languette afin de bloquer un outil (180) reçu.

8. Dispositif de changement d'outil (30) selon la revendication 6 ou 7, **caractérisé en ce qu'**au moins certains des emplacements de réception (140) du magasin d'outils (32) sont accouplés à une languette de maintien (202) qui bloque un outil (180) reçu dans l'emplacement de réception (140) avec un élément d'encliquetage (204), **et en ce que** l'équipement de transfert (90) présente un coulisseau de décalage (152) qui supporte le réceptacle de transfert (100) et est réalisé pour dévier la languette de maintien (202) afin de déposer un outil (180) dans l'emplacement de réception (140) ou de le libérer de l'emplacement de réception (140).

9. Dispositif de changement d'outil (30) selon l'une des revendications 6 à 8, **caractérisé en ce que** l'équipement de transfert (90) présente une pince double (102) disposée sur le chariot de transfert (92), laquelle peut en particulier pivoter autour d'un axe de pivotement (166).

10. Dispositif de changement d'outil (30) selon la revendication 9, **caractérisé en ce qu'**un axe de levage (162) est en outre prévu sur le chariot de transfert (92), lequel axe de levage est associé au moins à la pince double (102) ou au réceptacle de transfert (100) afin de permettre une remise d'outils (180) entre la pince double (102) et le réceptacle de transfert (100), **et en ce que** l'axe de levage est en particulier associé à la pince double (102) et coïncide avec l'axe de pivotement (166) de la pince double (102).

11. Dispositif de changement d'outil (30) selon l'une des revendications 1 à 10, **caractérisé en ce que,** lors du mouvement de déplacement entre la première position de remise (108) et la seconde position de remise (110), le chariot de transfert (92) actionne une porte (114) fermant un espace de travail (18), **et en ce que** le chariot de transfert (92) pénètre, en particulier au moins temporairement, dans l'espace de travail (18).

12. Dispositif de changement d'outil (30) selon l'une des revendications 1 à 11, **caractérisé en ce qu'**un appareil de lecture (142), en particulier solidaire au châssis, est associé au magasin d'outils (32) pour l'identification d'outils, dans lequel le magasin d'outils (32) est déplacé le long de l'axe de magasin (132) et est mis en rotation autour de l'axe de magasin (132) afin d'amener un emplacement de réception (140) sélectionné dans une zone de détection de l'appareil de lecture (142), **et/ou en ce que** le magasin d'outils (32) présente une porte d'accès (34) à travers laquelle une pluralité d'emplacements de réception (140), en particulier des emplacements de réception (140) décalés les uns par rapport aux autres le long de l'axe de magasin (132), est accessible depuis l'extérieur.

13. Machine-outil (10) comportant un châssis (12, 120), au moins un porte-pièce (78) pour la réception d'une pièce, et au moins un porte-outil (62) pour la réception d'un outil (180), **caractérisée par** au moins un dispositif de changement d'outil (30) selon l'une des revendications 1 à 12, dans laquelle le porte-outil (62) peut être déplacé dans la seconde position de remise (110) par rapport au châssis (12, 120) pour un changement d'outil, et dans laquelle le porte-outil (62) est en particulier réalisé pour recevoir une tige de support (182) de l'outil (180) et fait partie intégrante d'une broche porte-outil (60) pouvant pivoter afin d'amener le porte-outil (62), dans la seconde position de remise (110), dans une orientation de remise pour le changement d'outil.

14. Machine-outil (10) selon la revendication 13, **caractérisée en ce que** le porte-pièce (78) est associé à une broche porte-pièce (80) réalisée pour la mise en rotation de pièces autour d'un axe (86) orienté en particulier parallèlement à l'axe de transfert (96), **en ce que** le porte-outil (62) peut être déplacé selon au moins trois axes par rapport au porte-pièce (78), **en ce qu'**un contre-support sous forme de porte-pièce secondaire (82) est opposé au porte-pièce (78), **en ce que** le porte-pièce (78) et le porte-pièce secondaire (82) sont orientés de manière à être concentriques l'un par rapport à l'autre, **en ce que** le porte-outil (62) et le porte-pièce secondaire (82) sont espacés du magasin d'outils (32) au moins dans une orientation de base, **et en ce que** le porte-pièce (78) est adjacent au magasin d'outils (32).

15. Procédé pour le changement d'un outil (180), en particulier à l'aide d'un dispositif de changement d'outil (30) selon l'une des revendications 1 à 12, comportant les étapes suivantes :
- mise en place d'un magasin d'outils (32) conçu comme une colonne qui peut être mis en rotation autour d'un axe de magasin (132) orienté verticalement et peut être déplacé verticalement le long de l'axe de magasin (132), qui comporte une pluralité d'emplacements de réception (140) pour des outils (180), dont au moins certains sont disposés de manière à être décalés les uns par rapport aux autres le long de l'axe de magasin (132) et au moins certains sont disposés de manière à être décalés les uns par rapport aux autres autour de l'axe de magasin (132),
dans lequel les emplacements de réception (140) sont réalisés pour maintenir des outils (180) au niveau d'une rainure de réception (188) des outils (180) et dans une orientation horizontale de l'axe longitudinal (186) des outils (180), orthogonalement à l'axe de magasin (132), et
dans lequel les emplacements de réception (140) sont ouverts latéralement vers l'extérieur de sorte que les outils (180) peuvent être retirés latéralement vers l'extérieur, orthogonalement à l'axe de magasin (132),
- mise en place d'un équipement de transfert (90) présentant un chariot de transfert (92), lequel équipement de transfert peut être déplacé entre une première position de remise (108) par rapport au magasin d'outils (32) et une seconde position de remise (110) afin de transférer des outils (180) entre le magasin d'outils (32) et un porte-outil (62) de la machine-outil (10), et comprend en particulier une pince double (102) pour un changement d'outil avec le porteoutils (62) ainsi qu'un coulisseau de décalage (152) comportant un réceptacle de transfert (100) pour un changement d'outil avec le magasin d'outils (32),
- mouvement du magasin d'outils (32) afin de mettre en place un emplacement de réception (140) dans la première position de remise (108) pour un outil (180), et
- transfert d'un outil (180) entre la première position de remise (108) et la seconde position de remise (110),
dans lequel, dans la première position de remise (108), la remise est effectuée directement entre le magasin d'outils (32) et l'équipement de transfert (92), en particulier à l'aide du coulisseau de décalage (152), et
dans lequel, dans la seconde position de remise (110), la remise est effectuée directement entre l'équipement de transfert (90) et le porte-outil (62), en particulier à l'aide de la pince double (102).
